## Europäisches Patentamt
## European Patent Office
## Office européen des brevets

(19)

(11) Veröffentlichungsnummer : **0 197 172**
**B1**

(12) **EUROPÄISCHE PATENTSCHRIFT**

(45) Veröffentlichungstag der Patentschrift :
27.07.88

(51) Int. Cl.⁴ : **B 23 B 25/02**

(21) Anmeldenummer : 85104285.3

(22) Anmeldetag : 09.04.85

(54) Verfahren zur Erzeugung von Bruchspänen bei der Bearbeitung von Werkstücken und Einrichtung hierzu.

(43) Veröffentlichungstag der Anmeldung :
15.10.86 Patentblatt 86/42

(45) Bekanntmachung des Hinweises auf die Patenterteilung : 27.07.88 Patentblatt 88/30

(84) Benannte Vertragsstaaten :
DE FR GB IT

(56) Entgegenhaltungen :
CH-A-   388 065
DE-A- 2 214 103
FR-A- 1 295 097
GB-A-   991 336

(73) Patentinhaber : Wilhelm Hegenscheidt Gesellschaft mbH
Neusser Strasse 3
D-5140 Erkelenz (DE)

(72) Erfinder : Dombrowski, Theodor
Anton-Heinen-Strasse 43
D-5140 Erkelenz (DE)
Erfinder : Klosterhalfen, Hartwig
Am Weinberg 7
D-5160 Düren (DE)

(74) Vertreter : Liermann, Manfred
Josef-Schregel-Strasse 19
D-5160 Düren (DE)

EP 0 197 172 B1

Jouve, 18, rue St-Denis, 75001 Paris, France

**Beschreibung**

Die Erfindung betrifft ein Verfahren zur Erzeugung von Bruchspänen bei der Drehbearbeitung von Werkstüken mittels einer sich im Verlauf der Werkstückumdrehung verändernden Vorschubgeschwindigkeit des Drehwerkzeuges, so wie eine Einrichtung zur Durchführung des Verfahrens. Ein solches Verfahren und eine dazu geeignete Einrichtung sind bereits bekannt geworden mit der DE-OS 22 33 229. Es zeigt sich jedoch, daß dieses Verfahren nicht geeignet ist, einen sicheren Spanbruch zu gewährleisten. Vielmehr kommt es während der Drehbearbeitung in periodischem Wechsel zu kurzbrechenden Spänen und dann über längere Zeit wieder zu nicht kurz brechenden Spänen mit unterschiedlichen Spandicken. Darüber hinaus ist dieses Verfahren auch nur für eine geradlinige Bearbeitung eines Werkstücks anwendbar und auch die offenbarte Vorrichtung läßt eine andere Werkzeugbewegung nicht zu.

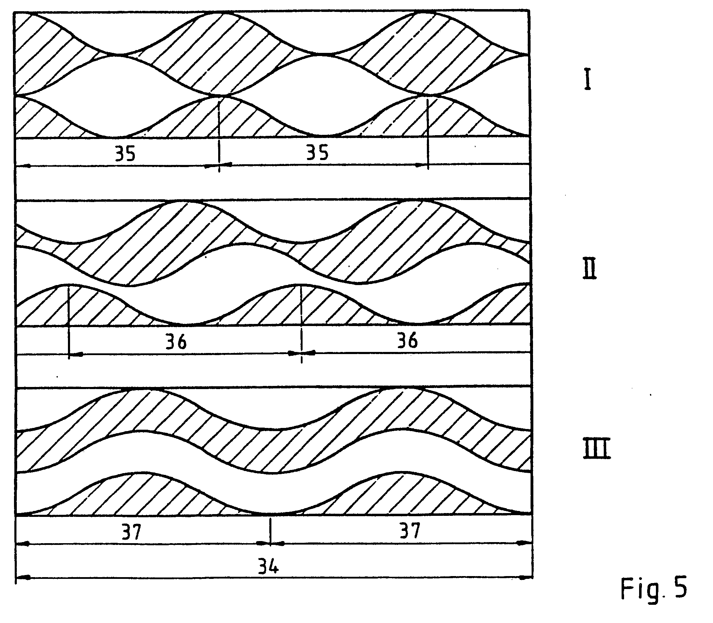

Es ist weiter mit der CH-A- 338 065 eine Einrichtung bekannt geworden, mit der ein Drehwerkzeug in Richtung parallel zur Drehachse des Werkstückes und in seiner Frequenz abhängig von der Drehzahl des Werkstückes in Schwingung versetzt werden kann. Mit dieser Einrichtung ist es jedoch nicht möglich eine von der Zylinderform abweichende Werkstückkontur mir befriedigendem Spanbruch zu bearbeiten. Außerdem ist bei dieser Einrichtung die Amplitude der Schwingung ihrer Größe nach zeitabhängig. Über die Größe der vorzusehenden Amplitude der Schwingbewegung des Drehwerkzeuges kann dieser Schrift nichts entnommen werden. Der Aufbau der Steuerung für die Schwingbewegung des Drehwerkzeuges ist derart, daß bei abnehmender Drehzahl des Werkstückes die Amplitude der Schwingbewegung größer wird und umgekehrt. Dies führt bei Drehzahländerungen Zur Anpassung der Schnittgeschwindigkeit bei wechselnden Werkstückdurchmessern zu einem nicht befriedigenden Spanbruch und kann im Extremfall das Werkzeug überlasten. Zwar zeigt Figur 5 dieser Veröffentlichung einen im Grundsatz richtigen Ansatz. Die vorgeschlagenen Maßnahmen und die vorgeschlagene konstruktive Gestaltung erlauben es jedoch nicht kontinuierlich und in allen Betriebsbedingungen die Verhältnisse nach Figur 5 dieser Offenbarung auch tatsächlich zu erreichen. Die Figur 5 stellt nur einen Augenblickszustand dar, der über einen Bereich wechselnder Arbeitsbedingungen mit den in dieser Veröffentlichung vorgeschlagenen Maßnahme nicht aufrecht erhalten werden kann.

Dem gegenüber liegt der Erfindung die Aufgabe zugrunde, ein Verfahren und eine Vorrichtung der eingangs beschriebenen Art vorzuschlagen, zur Ermöglichung eines zuverlässigen kurzen Spanbruchs, besonders bei der Drehbearbeitung von Werkstücken sehr großen Durchmessers, wobei die Länge der Spanbruchstücke vorherbestimmbar sein soll und wobei auch nicht geradlinige Konturen bearbeitbar sein sollen.

Diese Aufgabe ist hinsichtlich des notwendigen Verfahrens dadurch gelöst, daß das Werkzeug entlang der Linie der Vorschubvektoren schwingt, wobei die Schwingungsamplitude etwa dem halben effektiven Vorschubweg pro Umdrehung entspricht und die Wellenlänge der Schwingung so bemessen ist, daß sie selbst oder ihr ganzzahliges Vielfaches zuzüglich einer halben Wellenlänge stets gleich ist dem jeweiligen momentanen Werkstückumfang durch den betrachteten Arbeitspunkt. Es ist also festzustellen, daß die an sich bekannte Schwingbewegung des Drehwerkzeuges nicht mehr unbedingt eine Schwingbewegung auf gerader Linie sein muß, sondern es soll das Werkzeug den Vorschubvektoren bei der Schwingbewegung folgen, so daß also die Schwingbewegung ggf. auch entlang einer gekrümmten Linie erfolgen kann. Es soll also die Schwingbewegung nicht grundsätzlich geradlinig erfolgen, sondern das Werkzeug soll immer entlang der herzustellenden Kontur schwingen. Hierbei ist es wichtig, daß die Schwingungsamplitude etwa dem halben effektiven Vorschubweg, den das Werkzeug pro Umdrehung des Werkstückes zurücklegt, entspricht. Hierbei ist der effektive Vorschubweg der Vorschubweg, den das Werkzeug entlang der herzustellenden Kontur zurücklegt. Zur Erzielung des gewünschten Spanbruches ist nunmehr besonders wichtig die Wellenlänge der Schwingung des Werkzeuges, denn diese muß so bemessen sein, daß sie selbst oder ihr ganzzahliges Vielfaches ergänzt um die Hälfte der Wellenlänge der Schwingung den Umfang ergibt, den der betrachtete Arbeitspunkt des Werkzeuges am Werkstück bei einer Umdrehung des Werkstückes beschreibt. Hierdurch ist sichergestellt, daß durch die entsprechende Schwingbewegung des Werkzeuges immer die Minima und Maxima der durch die Schwingung erzeugten Werkstückkontur so zusammentreffen, daß in Vorschubrichtung gesehen auf ein Wellental des vorangegangenen Schnittes stets ein Wellenberg des nachfolgenden Schnittes folgt, so daß an diesem Punkt die Spandicke mindestens angenähert zu Null wird und der Span bricht. Die Spanbrechung erfolgt mit absoluter Zuverlässigkeit und ist nicht von irgendeiner Zufallskonstellation am Werkstück abhängig. Die Spanlänge ist hierbei über die Wellenlänge der Schwingung vorherbestimmbar.

Eine Einrichtung zur Durchführung des Verfahrens kann eine Dreheinrichtung mit einem Support sein, mit mindestens einem angetriebenen Längs- und Querschlitten zur Bewegung des Drehwerkzeuges, deren Antriebe von einer Steuereinrichtung gesteuert werden. Hierbei soll der Begriff « Support » nicht nur solche Einrichtungen umfassen, bei denen die Schlittenbewegung von einer zu kopierenden Schablone gesteuert wird, sondern vielmehr auch solche Einrichtungen, bei denen die Bewegung beispielsweise numerisch gesteuert nach einem vorgegebenen Programm erfolgt, so daß hier sozusagen das Bewegungsprogramm des steuernden Rechners kopiert wird.

Zur Durchführung des erfindungsgemäßen Verfahrens ist eine solche Einrichtung dadurch gekennzeichnet, daß Mittel zur Erzeugung einer periodischen Schwingbewegung vorgesehen sind, die derart mit der Steuereinrichtung zusammenwirken, daß die erzeugte Schwingbewegung an jedem Punkt entlang der Bearbeitungskontur erfolgt, wobei weiter Mittel zur Einstellung der Amplitude und der Frequenz der Schwingbewegung vorgesehen sind.

Mittel zur Erzeugung einer periodischen Schwingbewegung sind im Stand der Technik an sich bekannt, wie auch die eingangs beschriebene Schrift zeigt. Es ist nun noch erforderlich, dafür zu sorgen, daß diese Schwingbewegung immer in Richtung der zu erzeugenden Kontur erfolgt. Hierzu ist es erforderlich, daß das die Schwingbewegung erzeugende Bauelement mit der Steuerung zusammenarbeitet, so daß die Steuerung veranlaßt wird, ihre Bewegung zur Erzeugung der gewünschten Schwingbewegung in beide Richtungen pendelnd auszuführen. Hierzu ist lediglich eine der Bauart der Steuerung entsprechende Umsteuerung der Organe, die die Bewegung erzeugen, erforderlich. Weiterhin ist es erforderlich Amplitude und Frequenz der Schwingbewegung festzulegen und ggfls. einzustellen. Die Größe der Amplitude ist hierbei abhängig von dem zu überlagernden Vorschub, wobei die Schwingfrequenz des Werkzeuges so abzustimmen ist, daß die Lehre des Verfahrens nach Anspruch 1, wie eben beschrieben, erreicht wird. Die Frequenz muß also so bemessen sein, daß an irgendeinem Arbeitspunkt in Umfangsrichtung des Werkstückes betrachtet, der durch eine Kreisbewegung dieses Punktes entstehende Umfang einem ganzzahligen Vielfachen der durch die Frequenz entstehenden Wellenlänge zuzüglich einer halben Wellenlänge entspricht. Um dies zu erreichen muß die Frequenz in Relation zur Drehzahl des Werkstückes eingestellt werden.

Es ist daher nach einer Ausgestaltung der erfindungsgemäßen Einrichtung noch vorgeschlagen, daß Mittel zur Erfassung der Drehzahl einer Hauptspindel vorgesehen sind, die derart mit den Mitteln zur Einstellung der Frequenz der Schwingbewegung verknüpft oder verknüpfbar sind, daß eine Veränderung der Drehzahl der Hauptspindel eine proportionale Veränderung der Frequenz der Schwingbewegung bewirkt. Auf diese Art wird es möglich, die einmal eingestellte Relation zwischen Frequenz und Drehzahl auch bei veränderten Drehzahlen, beispielsweise zur Veränderung von Schnittgeschwindigkeiten, beizubehalten, so daß eine neuerliche Einstellung entfallen kann.

In weiterer Ausgestaltung der erfindungsgemäßen Einrichtung ist noch vorgesehen, daß die Mittel zur Erzeugung der Schwingbewegung in Abhängigkeit von der Drehzahl der Hauptspindel zwangsgesteuert sind, wobei die Frequenz der Schwingbewegung als Schwingung pro Hauptspindelumdrehung einstellbar ist. Ohne eine solche Zwangssteuerung ist es möglich, daß sich geringfügigste Einstellungsfehler in der Relation zwischen Frequenz und Drehzahl im Laufe vieler Umdrehungen der Hauptspindel aufaddieren, so daß bei den Schwingungen des Werkzeuges eine unerwünschte Phasenverschiebung eintritt derart, daß ein Spanbruch über längere Zeit nicht erfolgt, wobei später wieder Spanbruch eintritt, wenn die Phasenverschiebung genügend groß geworden ist um wieder die Ausgangssituation herzustellen. Die beschriebene Zwangssteuerung macht daher eine hochpräzise Einstellung der Relation von Frequenz und Drehzahl überflüssig.

Eine weitere Ausgestaltung der Erfindung sieht vor, daß eine die Drehzahl und den Drehwinkel der Hauptspindel erfassende Signaleinrichtung vorgesehen ist, die in Abhängigkeit von Drehzahl und Drehwinkel der Hauptspindel Steuerimpulse an die Mittel zur Erzeugung der Schwingbewegung abgibt, wobei die über eine Umdrehung der Hauptspindel anfallenden Steuerimpulse an der Signaleinrichtung so aufteilbar sind, daß hierdurch die Mittel zur Erzeugung der Schwingbewegung (2n + 1) Halbschwingungen durchführen, wobei « n » eine ganze Zahl ist. Dies ist eine einfache Möglichkeit der Zwangssteuerung, bei der gleichzeitig und auf einfache Art und Weise eine Überlagerung des notwendigen Vorschubweges möglich wird.

Eine weitere Ausgestaltung der Erfindung bezogen auf einen CNC-gesteuerten Support, bei dem jeder Schlitten mit einem Wegmeßsystem zusammenarbeitet, das mindestens je aus einem Maßstab und einem dem Maßstab zugeordneten Reiter zur Wegabfrage am Maßstab besteht wird darin gesehen, daß Mittel zur Erzeugung einer alternierenden Relativbewegung zwischen Maßstab und Reiter vorgesehen sind, wobei die Mittel mindestens über einen Frequenzgenerator miteinander koordiniert sind. Hierdurch gelingt es, die gewünschte koordinierte Schwingbewegung auch bei CNC-gesteuerten Schlitten zu erzeugen, ohne daß hierfür nennenswert größere Rechner- und Speicherkapazitäten notwendig wären.

Eine ergänzende Ausgestaltung der Erfindung sieht vor, daß die Mittel zur Erzeugung der alternierenden Relativbewegung als Magnetspulen mit entsprechenden Ankern ausgebildet sind. Hierdurch wird ein in Frequenz und Amplitude leicht steuerbarer Antrieb erreicht. Natürlich können diese Mittel auch aus anderen Antriebseinrichtungen, wie z. B. einem Fluidzylinder als die Verschiebung bewirkendes Mittel bestehen. Die Relativbewegung könnte auch über eine Gewindespindel, die hin- und hergedreht wird durch einen Antrieb erreicht werden. Auch weitere Möglichkeiten sind denkbar.

Eine weitere Ausgestaltung der Erfindung sieht vor, daß das über die Magnetspulen bewegte Teil das Wegmeßsystem in stromlosem Zustand der Magnetspule in Mittelstellung zentriert ist, wobei die Mittelstellung die Bezugsstellung für die Weginformation der CNC-Steuerung bildet. Hierdurch wird in einfacher Weise die Null-Position der Schlitten bestimmbar.

In ergänzender Ausgestaltung ist schließlich noch vorgesehen, daß zwischen Frequenzgenerator und Magnetspulen eine Einrichtung zur Aufteilung des vom Frequenzgenerator ankommenden Signals auf die Magnetspulen vorgesehen ist, wobei die Aufteilung in Abhängigkeit von Steigungswinkel, vorzugsweise vom augenblicklichen Steigungswinkel, des herzustellenden Profils erfolgt. Hierdurch gelingt es mit

3

einfachen Mitteln der zu erzeugenden Kontur auch während der Schwingbewegung mit ausreichender Genauigkeit zu folgen.

Eine weitere Ausgestaltung der Erfindung bezogen auf einen hydraulisch gesteuerten Kopiersupport, bei dem mittels eines fühlergesteuerten Kopierventils ein den Geschwindigkeitsvektor des Drehwerkzeuges bestimmender und regelbarer Drucköstrom auf je eine den Längsschlitten und den Planschlitten antreibende Kolben-Zylinder-Einheit aufgeteilt wird sieht vor, daß eine Schalttrommel vorgesehen ist, die mit der Hauptspindel in Antriebsverbindung steht in einer solchen Übersetzung, daß pro Schwingung des Werkzeuges eine Umdrehung der Schalttrommel erfolgt, wobei die Schalttrommel mindestens zwei Nockenbahnen mit Nocken aufweist, von denen zugeordnete Schalter betätigt werden, wovon über die zugeordneten Schalter die eine Nockenbahn das Signal « Vorschub vor » und die andere Nockenbahn « Vorschub zurück » abgiebt, wobei das Signal « vor » etwa den (1 + 1/n)-fachen Wert des Grundvorschubes und das Signal « zurück » etwa den (1 − 1/n)-fachen Wert des Grundvorschubes an der Einrichtung zur Erzeugung der Schwingbewegung ansteht. Dies ist eine besonders einfache Art insbesondere bei fühlergesteuerten Kopiersupporten hydraulischer Bauart die gewünschte Schwingbewegung und Vorschubbewegung zu erzeugen und zu steuern. Die Antriebsverbindung zwischen Schalttrommel und Hauptspindel sorgt hierbei dafür, daß ein Phasenfehler zwischen Frequenz und Drehzahl der Hauptspindel nicht auftreten kann.

Eine ergänzende Ausgestaltung der Erfindung sieht vor, daß in der Antriebsverbindung von Hauptspindel und Schalttrommel ein Schaltgetriebe vorgesehen ist. Hierdurch gelingt es, die Schalttrommel bei gleicher Drehzahl der Hauptspindel mit unterschiedlichen Drehzahlen anzutreiben und hierdurch die Schwingfrequenz des Werkzeuges zu ändern.

Eine weitere Ausgestaltung der Erfindung sieht für den Fall, daß die Kolben-Zylinder-Einheit für die Planbewegung in der einen Zylinderkammer direkt mit einer Druckquelle und in der anderen Zylinderkammer über ein Fühlerventil mit der Druckquelle verbunden ist und wobei die Kolben-Zylinder-Einheit für die Längsbewegung in der einen Zylinderkammer direkt mit der Druckquelle und in der anderen Zylinderkammer mit dem Tank verbunden ist, vor, daß die Verbindungsleitungen der Kolben-Zylinder-Einheit für die Längsbewegung durch eine Einrichtung zum Sperren und Vertauschen der Ölströme geführt sind, wobei die Tankleitung durch ein druckgesteuertes Sperrventil geführt ist, dessen Steuerleitung direkt mit der Druckquelle verbunden ist. Durch die in der beschriebenen Weise zwischengeschaltete Einrichtung zum Sperren und Vertauschen der Ölströme gelingt es in Verbindung mit dem beschriebenen druckgesteuerten Sperrventil auf einfachste Art und Weise die die Kopierbewegung erzeugenden Kolben-Zylinder-Einheiten jeweils durch Umsteuerung in Schwingbewegung zu versetzen, wobei diese Schwingbewegung wegen der Aufteilung des Ölstroms durch das Kopierfühlerventil auf die beiden Kolben-Zylinder-Einheiten immer entlang der zu kopierenden Linie erfolgt. Dreheinrichtungen mit den beschriebenen Kopiersteuerungen sind weit verbreitet im Einsatz. Mit der hier beschriebenen Ausgestaltung lassen sich solche bereits bestehenden Kopiersteuerungen auf einfachste Art und Weise so umrüsten, daß das Werkzeug die gewünschte Schwingbewegung zusammen mit dem notwenigen Vorschub durchführt.

In ergänzender Ausgestaltung ist schließlich noch vorgesehen, daß die Einrichtung zum Sperren und Vertauschen der Ölströme als Vierwegedreistellungsschieberventilausgebildet ist. Dies ist ein handelsübliches Bauelement, dessen einfacher Einsatz das angestrebte Ziel besonders leicht und kostengünstig erreichen läßt.

Das erfindungsgemäße Verfahren soll nunmehr beispielhaft anhand der Zeichnungen näher erläutert werden. Hierbei wird in den Zeichnungen als Beispiel für eine erfindungsgemäße Einrichtung ausgegangen von einem Kopiersupport einer Radsatzdrehmaschine.

Es zeigen :

Figur 1   Seitenansicht eines Kopiersupportes

Figur 2   Ansicht des Supports in Richtung B der Figur 1

Figur 3   Hydraulikschaltplan des Supportes

Figur 4, 4a, Vergrößerte Darstellung einer Vorschubrille für kontinuierlichen Vorschub und einer Vorschubrille eines Schwingvorschubes einer Schwingung nach der Erfindung

Figur 5   Vorschubbild bei unterschiedlicher Anzahl der Schwingungsperioden pro Werkstückumdrehung schematisch

Figur 6   Schalttrommel im Schnitt gemäß Linie II-II nach Figur 7

Figur 7   Schalttrommel im Schnitt gemäß Linie I-I der Figur 6

Figur 8   Abwicklung des Schalttrommelumfangs

Figur 9   Antriebsschema der Schalttrommel

Figur 10   Hydraulikschaltplan

Figur 11   Elektrische Steuerung für die Schwingbewegung und den kontinuierlichen Vorschub

Figur 12   Elektrische Kopiersteuerung für normalen Vorschubbetrieb

Figur 13   Elektrische Kopiersteuerung für Schwingvorschub

Figur 14   Kopiersteuerung

Figur 15   Geschwindigkeitsdiagramm

Figur 16   Kopiersteuerung

Figur 17   Schablonenprofil

Figur 18   Schema einer elektronischen Steuerung Figur 19   Diagramm eines Steuersignals
Figur 19'  Ventilkolben schematisch
Figur 20   CNC-Steuerung
Figur 21   Bewegungsdiagramm
Figur 22   Bewegungsdiagramm

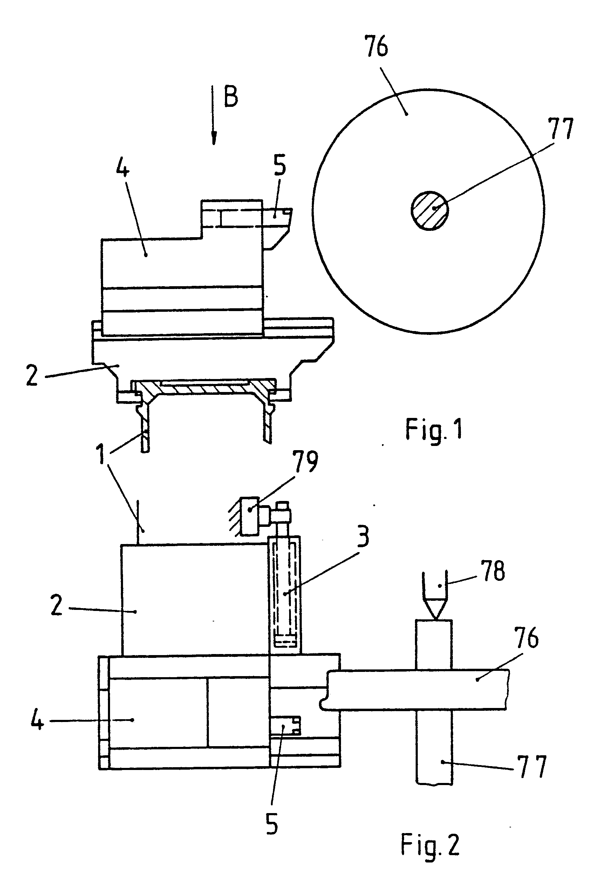

Die Figur 1 zeigt in schematisierter Darstellung einen möglichen Aufbau eines hydraulisch gesteuerten Kopiersupportes einer Radsatzdrehbank in Seitenansicht. Figur 2 zeigt diese Anordnung in Draufsicht, also in Richtung des Pfeiles B nach Figur 1.

Auf den Längsführungen 1 eines nicht weiter dargestellten Maschinenbettes gleitet ein Längsschlitten 2, der über eine Kolben-Zylinder-Einheit 3 verschoben werden kann. Auf dem Längsschlitten 2 ist in an sich bekannter Anordnung ein Planschlitten 4 angeordnet, der winklig zur Verschieberichtung des Längsschlittens, vorzugsweise rechtwinklig, auf dem Längsschlitten ebenfalls von einer Kolben-Zylinder-Einheit, die jedoch nicht näher dargestellt ist, verschoben werden kann. Der Planschlitten 4 trägt hierbei das Werkzeug 5.

Kopierschlitten des oben beschriebenen grundsätzlichen Aufbaues sind bekannt, so daß es einer detaillierteren Beschreibung nicht bedarf. Hierbei können Kopierschlitten dieses Aufbaus auch so konstruiert sein, daß der Längsschlitten 2 nicht unmittelbar auf den Längsführungen des Bettes angeordnet ist, sondern vielmehr auf einem weiteren Zwischenschlitten, der den Längsschlitten trägt und der seinerseits auf den Längsführungen 1 des Maschinenbettes verschiebbar und feststellbar geführt ist, wobei dann natürlich das Widerlager 79 für die Kolbenstange der Kolben-Zylinder-Einheit 3 an diesem Zwischenschlitten befestigt ist. Kopierschlitten der beiden soeben beschriebenen Typen sind weit verbreitet, insbesondere bei Radsatzdrehmaschinen, im Einsatz, sind damit hinreichend bekannt und haben sich gut bewährt.

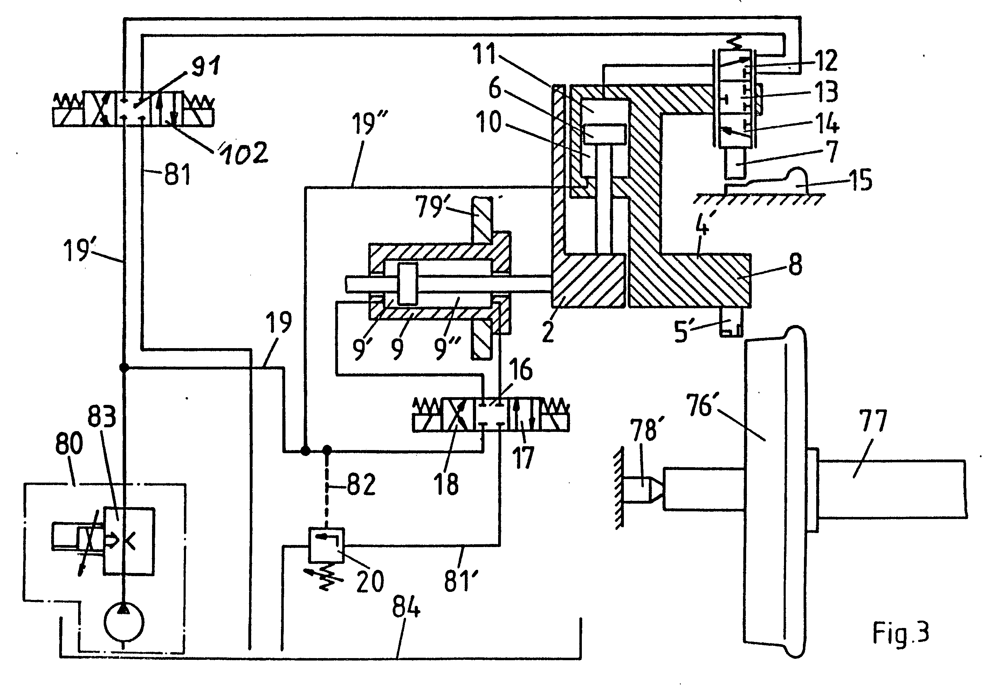

In Figur 3 ist ein Hydraulikschaltplan für einen soeben beschriebenen Kopiersupport dargestellt. Bekannte Radsatzdrehmaschinen verfügen über meistens 2 solcher Kopiersupporte, damit die beiden Räder 76 und 76' eines Radsatzes gleichzeitig bearbeibet werden können. In der Maschine ist der zu bearbeitende Radsatz über die Radsatzwelle 77 in Körnerspitzen 78 bzw. 78' gehalten. Die Darstellungen nach Figuren 1 un 2 zeigen hierbei den linken Support einer solchen Maschine, während die Darstellung nach Figur 3 den rechten Support einer solchen Maschine zeigt. Im rechten Support trägt der Planschlitten 8 das Werkzeug 5'. Die Kolben-Zylinder-Einheit 6 — im weiteren Verlauf Planzylinder genannt — wird mit Hilfe des Fühlers 7 gesteuert.

Die Kolben-Zylinder-Einheit 9 — im weiteren Verlauf Längszylinder genannt — und der Planschlitten 8 sind in Figur 3 in Ausgangsstellung dargestellt. Hierbei wird der Tank 84 über die Schaltstellung 12 des Fühlers 7 mittels der Tankleitung 81 mit dem Zylinderraum 11 des Planzylinders 6 verbunden. Würde der Fühler 7 die Schaltstellung 14 schalten, so wäre der Zylinderraum 11 über die Druckleitung 19' mit der Druckquelle 80 verbunden. In der Schaltstellung 13 wären sowohl die Tankleitung 81 als auch die Druckleitung 19' gesperrt.

Der Zylinderraum 10 des Planzylinders 6 ist über die Druckleitung 19" und 19 ebenfalls mit der Druckquelle 80 verbunden. Die nicht näher bezeichnete Kolbenstange des Planzylinders 6 stützt sich hierbei am Längsschlitten 2 ab und ist dort befestigt.

Der Längsschlitten 2 wird verschoben von dem Längszylinder 9, der in alternativer Ausführungsform zu Figur 2 stationär angeordnet am Widerlager 79' befestigt ist. Hierbei ist die nicht näher bezeichnete Kolbenstange des Längszylinders 9 am Längsschlitten 2 befestigt. Der Zylinderraum 9' des Längszylinders 9 ist über die Druckleitung 19 mit der Druckquelle 80 verbunden. Der Zylinderraum 9" des Längszylinders 9 ist über die Leitung 81' mit dem Tank verbunden. Hierbei ist in der Leitung 81' ein druckgesteuertes Sperrventil 20 angeordnet, dessen Steuerleitung 82 mit der Leitung 19 verbunden ist.

Die Leitungen 19 und 81' sind über ein sogen. 4/3-Wegeventil, also einem Schieberventil mit vier Anschlüssen und drei Schaltstellungen mit den Zylinderräumen 9' bzw. 9" des Längszylinders 9 verbunden. In der in Figur 3 dargestellten Schaltstellung des Ventils 16 sind alle Leitungen gesperrt. Dieses Ventil 16 hat die Aufgabe die erwünschte Schwingbewegung zu erzeugen, wobei hierbei die grundsätzliche Schwingbewegung mit Hilfe des Fühlers 7 in Abhängigkeit von einer Schablone 15 für den Fühler 7 über die entsprechende Steuerung der Ölströme für die Zylinder 6 und 9 in eine sinngemäße Schwingbewegung dieser beiden als Antriebe wirkenden Zylinder 6 und 9 umwandeln, so daß über die entsprechende, vom Fühler 7 gesteuerte Schwingbewegung das Werkzeug 5 bzw. 5' immer entlang der von der Schablone 15 vorgegebenen Kontur schwingt.

Für eine Funktionsbetrachtung soll davon ausgegangen werden, daß das Ventil 16 sich in der Schaltstellung 17 und das Ventil 91 sich in Schaltstellung 102 befindet. Das druckgesteuerte Sperrventil 20, welches sich in der Leitung 81', die von Längszylinder 9 kommt, befindet, öffnet erst, wenn in der Druckleitung 19 ein bestimmter, am druckgesteuerten Sperrventil 20 einstellbarer Druck entstanden ist. Dieser einzustellende Druck muß selbstverständlich größer sein als der Druck, der benötigt wird um die unter Schnittbedingungen durchzuführende Bewegung des Planzylinders 6 durchzuführen.

Das Drucköl für die Zylinder 6 und 9, welches in seiner Gesamtmenge über das Mengenregelventil 83 der Druckquelle 80 geregelt wird, strömt zuerst in den Zylinderraum 10, da zunächst das druckgesteuerte Sperrventil 20 wegen des zu geringen Druckes in der Druckleitung 19 noch nicht geöffnet hat und somit der Längszylinder 9 blockiert ist. Damit aber bewegt sich der Planschlitten 4' mit dem Werkzeug 5' auf das Rad 76' eines Radsatzes, der zwischen Körnerspitzen 78, 78' eingespannt, ist, zu. Da der Fühler 7 mit seinem Ventilteil am Planschlitten 4' befestigt ist, setzt er nach entsprechender Planbewegung auf der Schablone 15 auf, so daß das Ventil des Fühlers 7 von der Schaltstellung 12 in die Schaltstellung 13 geschaltet wird. Hierzu genügen winzigste Wege ; die schematische Darstellung in Figur 3 ist stark vergröbert. Fühlerventile dieser Art sind jedoch bekannt und bedürfen daher hier keiner näheren Beschreibung.

Die Leitungen am Fühler 7 werden durch die Schaltstellung 13 des Fühlerventils alle getrennt. Der Planschlitten 4' kommt zum Stillstand. Hierdurch aber baut sich in der von der Druckquelle 80 kommenden Leitung 19 ein Druck auf, der das druckgesteuerte Sperrventil 20 öffnet, so daß hierdurch über die Schaltstellung 17 des Ventils 16 der Zylinderraum 9" des Längszylinders 9 über die Leitung 81' mit dem Tank 84 verbunden ist. Über die Leitung 19 wird nun gleichzeitig der Zylinderraum 9' mit Drucköl beaufschlagt, so daß der dort nicht näher bezeichnete Kolben nach rechts wandern kann und hierbei das im Zylinderraum 9" befindliche Drucköl über die Leitung 81' in den Tank abgeben kann.

Durch die solcherart erzeugte Längsbewegung des Längsschlittens 2, deren Geschwindkeit von der Ölmenge abhängt die das Mengenregelventil 83 liefert, trifft der Fühler 7 auf eine steigende Kontur der Schablone 15 und wird hierdurch in die Schaltstellung 14 geschaltet. In der Schaltstellung 14 kann der Zylinderraum 11 über die Leitung 19' mit Drucköl versorgt werden. Da dem Drucköl in diesem Zylinderraum eine um den Kolbenstangenquerschnitt vergrößerte Kolbenfläche zur Verfügung steht, wird hierdurch das Drucköl in der Zylinderkammer 10 über die Leitung 19" und 19 ausgepresst und wieder in die Leitung 19' eingespeist. Wird hierbei die Schaltstellung 14 ohne Drosselwirkung voll geschaltet, was beispielsweise bei einer sehr steilen Kontur der Schablone 15 geschieht, so ist sofort zu ersehen, daß größe Ölmengen für die Speisung der Zylinderkammer 11 benötigt werden, so daß der Öldruck in der Leitung 19 und damit in der Steuerleitung 82 abfällt, so daß das druckgesteuerte Sperrventil 20 schließt, wordurch die Tankverbindung für die Zylinderkammer 9" des Längszylinders 9 unterbrochen ist, so daß eine Längsbewegung des Längsschlittens 2 vom Längszylinder 9 nicht mehr bewirkt werden kann. Ist jedoch die entsprechende Kontur an der Schablone 15 weniger steil, dann ist die Schaltstellung 14 nicht voll eingefahren, sondern öffnet nur etwas und wirkt daher als Drossel. In einem solchen Fall ist die vom Zylinder 6 erzeugte Geschwindigkeit der Planbewegung des Planschlittens 4' geringer und es ist auch der Druckabfall in der Leitung 19 und damit auch in der Steuerleitung 82 geringer, so daß das druckgesteuerte Sperrventil 20 die Tankleitung 81' nicht vollständig sperrt sondern nur drosselt, so daß noch eine gleichzeitige Bewegung des Längsschlittens 2, angetrieben durch den Längszylinder 9, möglich ist. Auf diese Art und Weise kann eine entsprechende Kopierbewegung des Werkzeuges 5' erzeugt werden. Eine solche hydraulische Kopiersteuerung ist jedoch an sich bekannt, so daß hierauf an dieser Stelle nicht tiefer eingegangen werden muß.

Wird nun das Ventil 16 aus der Schaltstellung 17 über die nicht näher bezeichnete Mittelstellung umgeschaltet in Schaltstellung 18, dann kehrt sich die Vorschubrichtung für beide Zylinder 6 und 9 um, so daß durch ein einfaches Umschalten des Ventils 16 der soeben beschriebenen Art die erwünschte Schwingung erzeugt werden kann, die über das Kopierventil 7 so gesteuert wird, daß sie entlang der Kopierlinie erfolgt.

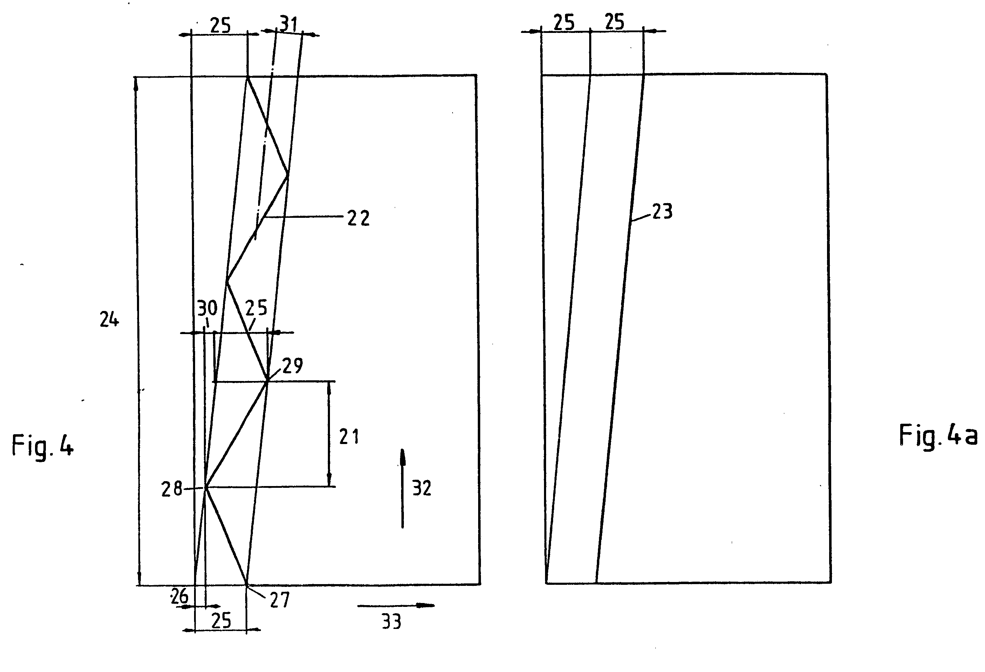

Figur 4 zeigt nun in vergrößerter und schematisierter Darstellung eine beispielsweise von dem Werkzeug 5' während der Bearbeitung des Radsatzes geschnittene Vorschubrille, und zwar eine Vorschubrille, die erzeugt worden ist von einem in gewünschter Weise schwingenden Werkzeug 5'. Die Figur 4a zeigt hierzu eine Vorschubrille, die bei kontinuierlichem Vorschub, also einem Vorschub ohne Schwingbewegung des Werkzeuges, entsteht. Der Pfeil 32 gibt hierbei die Schneidrichtung und der Pfeil 33 die Vorschubrichtung « Vorschub vor » an.

Für den kontinuierlichen Vorschub 25 während einer Umdrehung beispielsweise des Rades 76' (Umfang 24), wird ein bestimmtes Ölvolumen benötigt. Die Amplitude 31 der Schwingbewegung des Werkzeuges 5' muß ungefähr der Hälfte dieses Vorschubes 25, auch Grundvorschub genannt, entsprechen.

Um der Schwingbewegung einen kontinuierlichen Vorschub 25 zu überlagern, muß für die Schwingbewegung in Punkt 27 in Figur 4 aufwärts zu Punkt 28 der Grundvorschubweg 25 abzüglich dem Weg 26 zurückgelegt werden. Der Vorschubweg 26 entspricht hier dem Grundvorschub 25 dividiert durch einen Wert « z », der die Anzahl der Halbperioden 21 angibt.

Für die Bewegung von Punkt 28 zu Punkt 29 muß ein Grundvorschubweg 25 und ein Weg 30, der dem Weg 26 entspricht, zurückgelegt werden.

Figur 5 zeigt nun in den Bildern I-III mögliche Schwingungsformen für die Schwingbewegung des Werkzeuges 5', wobei grundsätzlich die Abbildung III eine typische Schwingungsform des Standes der Technik ist und es ist festzustellen, daß hier ein Spanbruch nicht eintreten wird. Da jedoch im Stand der Technik diese Schwingbewegungen in ihrer Phasenlage nicht aufeinander abgestimmt sind, entstehen Phasenverschiebungen, so daß nach einer entsprechenden Anzahl Werkstückumdrehungen eine Schwingungsform entsteht, wie sie in der Abbildung II dargestellt ist. Auch hier entsteht noch kein Spanbruch. Bei weiterer Phasenverschiebung kann ein Schwingungsbild, wie in der Abbildung I dargestellt ist, entstehen. Nur in dieser Situation ist Spanbruch zu erwarten. Es gilt also, diese Situation zu erzwingen. Wenn mit 34 der Werkstückumfang, im Ausführungsbeispiel Figur 5 der Umfang eines Rades des Radsatzes bezeichnet wird und mit 35, 36 und 37 jeweils die Wellenlänge der Schwingung, dann ist aus

**0 197 172**

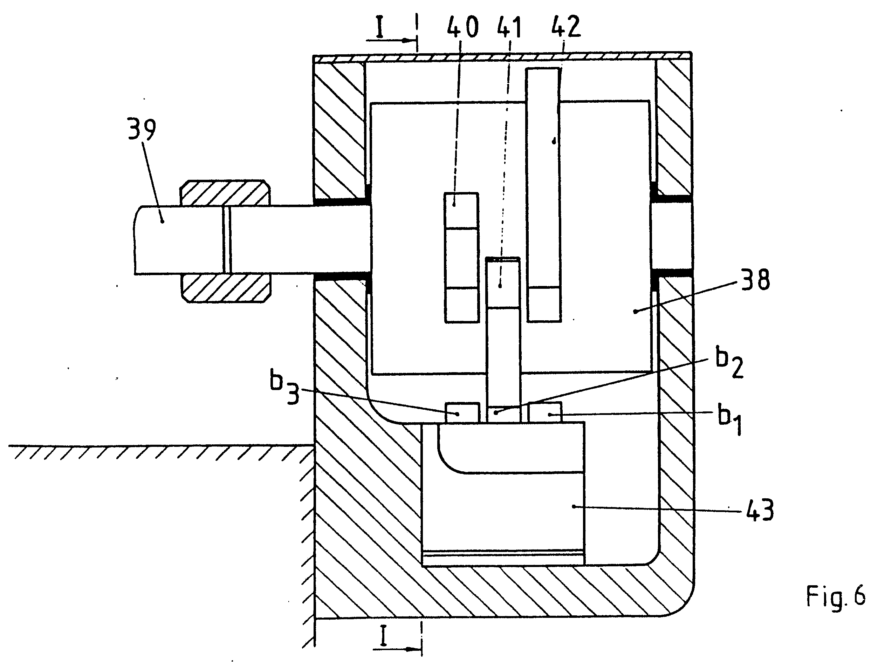

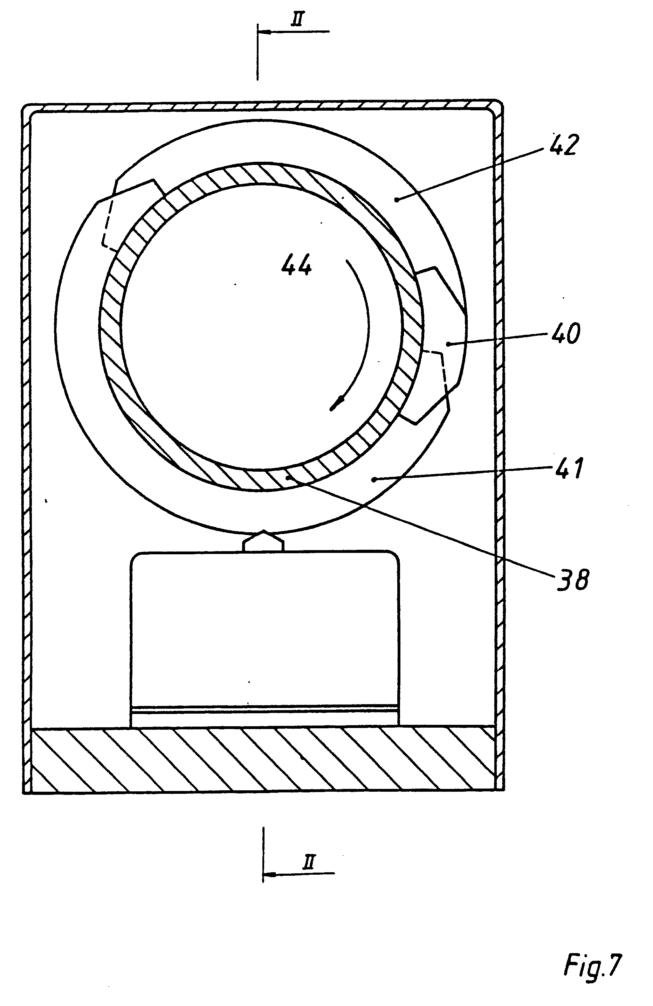

Figur 5, Abb. I zu ersehen, daß mit der Wellenlänge 35 ein Spanbruch erzielt wird und es ist hieraus abzulesen, daß die Wellenlänge 35 in Relation zum Umfang 34 so bemessen sein muß, daß eine ungerade Zahl von Halbperioden 21 (Figur 4) am Umfang 34 entsteht. Wird also mit « n » die Anzahl der am Umfang 34 auftretenden vollständigen Wellen bezeichnet, so gilt immer : $z = (2n + 1)$. Wird dieses Verhältnis nicht eingehalten, wird ein Spanbruch nicht erreicht. Hieraus folgt, daß in der Steuerung nach dem beschriebenen Ausführungsbeispiel das 4/3-Wegeventil 16 (Figur 3) mit einer bestimmten Frequenz synchron zur Radsatzdrehzahl, oder allgemein zur Werkstückdrehzahl, umgeschaltet werden muß. Im Ausführungsbeispiel werden die Befehle hierzu von zwei elektrischen Endschaltern gegeben, wie dies in den Figuren 6 bis 8 dargestellt ist. Diese Schalter sind mit der Bezeichnung $b_1$, $b_2$, z. B. in Figur 6 bezeichnet und zusammengefaßt in dem Endschalterblock 43. Zur Betätigung wird eine Trommel 38 von einer Welle 39 angetrieben. Auf der Trommel 38 befinden sich die Nocken 41 und 42, die die genannten Schalter $b_1$, $b_2$, des Endschalterblocks 43 betätigen. Die Trommel 38 dreht sich hierbei in Richtung des Pfeiles 44 (siehe Figur 7). In Figur 7 ist die Anordnung und Erstreckung der Schaltnocken 40, 41 und 42 gut erkennbar. Hierbei steuert der Nocken 42 die Schwingbewegung entgegen der normalen Vorschubrichtung und der Nocken 41 die Schwingbewegung in Richtung des normalen Vorschubes. Über den Schaltnocken 40 wird in Verbindung mit Endschalter $b_3$ der Abschaltpunkt oder auch der Einschaltpunkt der Schwingung festgelegt.

Der Endschalter $b_3$ ist jedoch vorher von Hand über Taster $d_1$ oder $d_2$ zu aktivieren : $d_1$ Schwingung aus ; $d_2$ Schwingung ein.

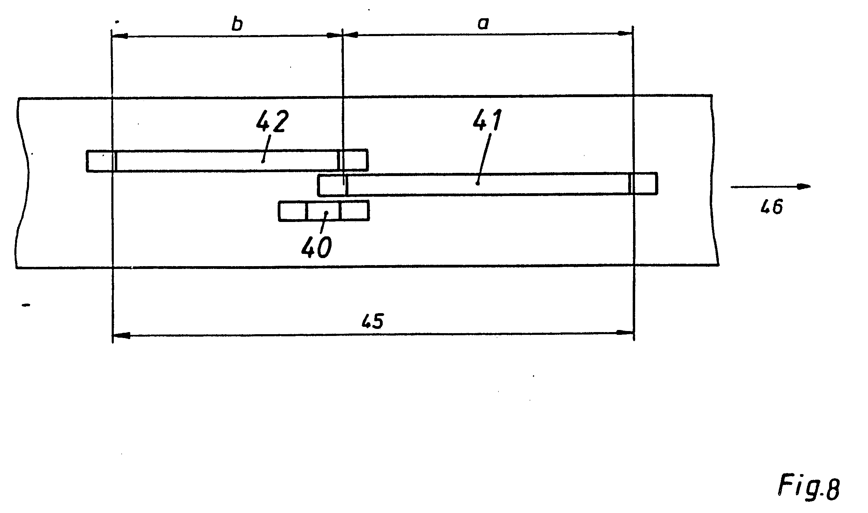

Die Abwicklung nach Figur 8 macht die Situation auf der Schalttrommel noch einmal deutlich. Die Endschalternocken 42 und 41 haben zusammen die Länge des Trommelumfangs 45 der Trommel 38, den sie im Verhältnis

$$[1 + (1/z)]/[1 - (1/z)] = a/b$$

teilen (siehe Figur 8). Der Abschaltpunkt der Schwingung liegt, entgegen der Drehrichtung 46 gesehen, vor dem Nocken 42, wodurch bewirkt wird, daß die Schwingung dann abgeschaltet bzw. eingeschaltet wird, wenn die Schwingbewegung in Vorschubrichtung beendet ist und die Schwingbewegung entgegen der Vorschubrichtung beginnen soll.

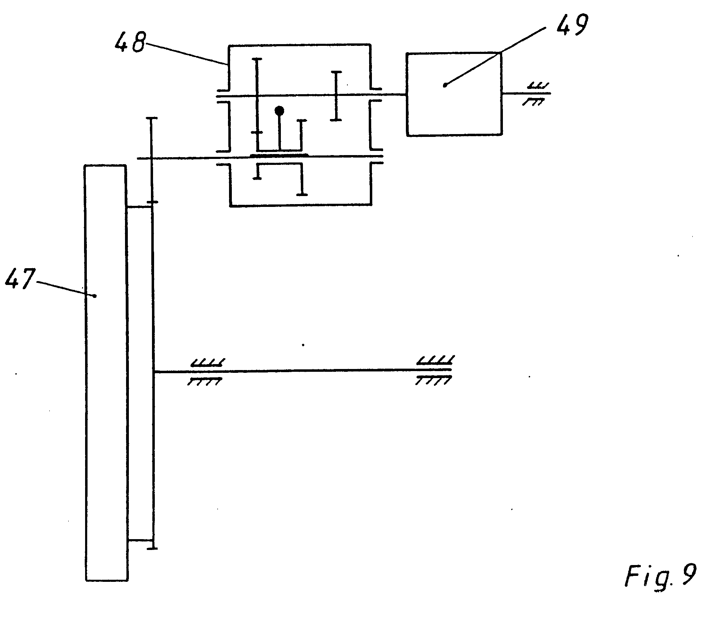

In Figur 9 ist ein schematischer Antrieb der Schalttrommel 38 dargestellt. Eine Planscheibe 47 der im Ausführungsbeispiel angesprochenen Radsatzdrehmaschine treibt ein Schaltgetriebe 48 an, über dessen Schaltstufen die Drehzahl der Schaltrommel 49 und somit die Wellenlängen der erzeugten Schwingung geändert werden kann. Hierdurch kann die Länge eines Bruchspans geändert werden.

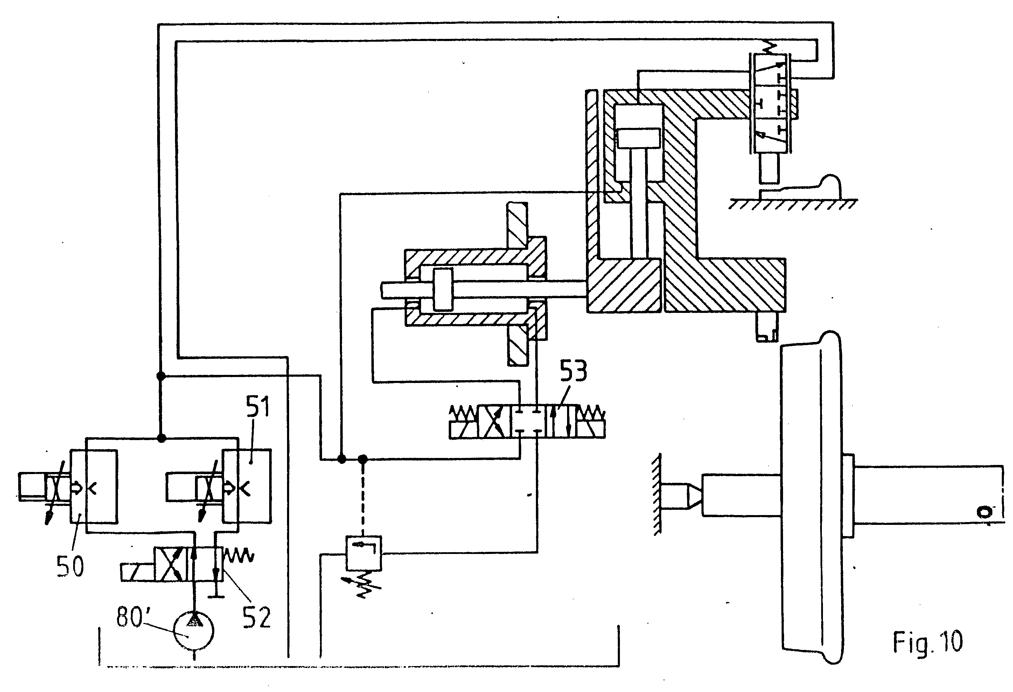

Der Vollständigkeit halber zeigt Figur 10 noch einen Hydraulikplan, in dem einer Druckquelle 80' ein Mengenregelventil 50 und ein weiteres Mengenregelventil 51 nachgeordnet ist, die wahlweise über ein Ventil 52 eingeschaltet werden können. Hierbei ist dann das Mengenregelventil 50 auf die Ölmenge für den Schwingvorschub eingestellt, während das Mengenregelventil 51 die gewünschte Ölmenge für einen kontinuierlichen Vorschub liefert. Das Ventil 53 entspricht wieder dem Ventil 16 im Hydraulikplan nach Figur 3. Diese Anordnung ermöglicht es auf einfache Weise zwischen Schwingvorschub und kontinuierlichem Vorschub zu wählen. Insbesondere bei Radsatzdrehmaschinen kann es wünschenswert sein, zeitweise mit kontinuierlichem Vorschub zu fahren nämlich dann, wenn sehr harte Bereiche des Radsatzes durchfahren werden, weil in diesen Bereichen ohnehin ein befriedigender Spanbruch eintritt und somit eine Schwingbewegung des Werkzeuges nicht erforderlich ist.

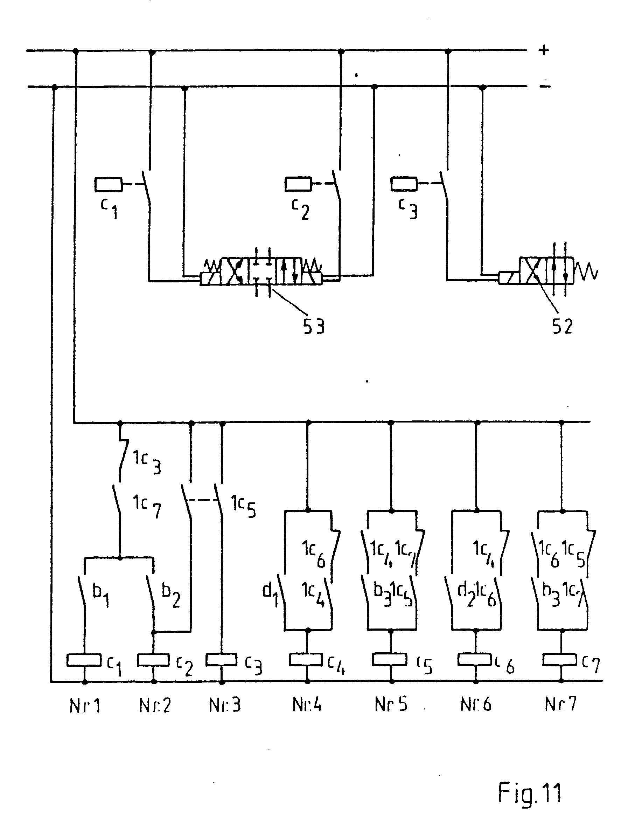

In Figur 11 ist ein Beispiel einer elektrischen Steuerung für die Schwingbewegung dargestellt. Hierbei steuert das Ventil 53 den Ölstrom für die Vorschubbewegung des Längszylinders, wobei die Magnete von Ventil 53 von Schütz $C_1$ und $C_2$ geschaltet werden. Über das Ventil 52 werden die Mengenregelventile 50 bzw. 51 mit Öl versorgt, wobei der Schaltmagnet des Ventils 52 über Schütz $C_3$ geschaltet wird. Hierbei bedeuten die Bezeichnungen des Planes folgendes :

$C_1$-$C_7$ : Schütze,

$b_1$ : Endschalter über Nocken 42, Figur 7, betätigt « Schwingvorschub zurück »,

$b_2$ : Endschalter über Nocken 41, Figur 7, betätigt « Schwingvorschug vor »,

$b_3$ : Endschalter über Nocken 40, Figur 7, definiert den Ein- bzw. Ausschaltzeitpunkt für den Schwingvorgang.

$d_1$ : Drucktaster, kontinuierlicher Vorschub ein, Schwingvorschub aus,

$d_2$ : Drucktaster, kontinuierlicher Vorschub aus, Schwingvorschub ein,

$1C_3$-$1C_7$ : Kontakte direkt von den entsprechenden Schützen geschaltet.

Über Drucktaster $d_1$, Nr. 4, wird der kontinuierliche Vorschub vorgewählt.

Das Schütz $c_4$ geht über Kontakt $1c_4$, Nr. 4, in Selbsthaltung, wenn $d_1$ in Nr. 4 betätigt wird und Kontakt $1c_4$ in Nr. 6 öffnet, so daß $c_6$ aus der Selbsthaltung herausgenommen wird, wodurch $1c_6$ in Nr. 6 und 7 geöffnet wird und Kontakt $1c_6$ in Nr. 4 geschlossen wird.

Bei dem nächsten Schalten des Endschalters $b_3$ spricht Schütz $c_5$ an und geht über $1c_5$ in Selbsthaltung.

Der Kontakt $1c_7$ in Nr. 5 ist geschlossen, da $1c_5$ in Nr. 7 geöffnet worden ist und Schütz $c_7$ aus der Selbsthaltung herausgenommen hat.

Die Schütze $c_2$ und $c_3$ werden nun über $1c_5$ in Nr. 3 mit Strom versorgt. Das Ventil 52 wird in die

7

gekreuzte Schaltstellung gebracht.

Das Mengenregelventil 51 in Figur 10 versorgt nun das Kopiersystem mit einer dem kontinuierlichen Vorschub entsprechenden Ölmenge.

Das Wegeventil 53 versorgt den Längszylinder mit konstantem Vorschuböl, da Schütz $c_2$ ebenfalls angezogen hat und Ventil 53 in die ungekreuzte Schaltstellung gebracht hat.

Soll nun der Schwingvorschub eingeschaltet werden, muß der Drucktaster $d_2$ von dem Bedienungsmann vorgewählt werden.

In Nr. 6 ist $1c_4$ geöffnet, da $c_4$ bisher in Selbsthaltung war.

Über die Betätigung von $d_2$ wird jedoch Schütz $c_4$ über Kontakt $1c_6$ in Nr. 4 stromlos, so daß Kontakt $1c_4$ in Nr. 6 schließt und Schütz $c_6$ nun Selbsthaltung gehen kann.

Der Kontakt $1c_6$ in Nr. 7 schließt und ermöglicht beim Schließen von Endschalter $b_3$ ein Ansprechen von Schütz $c_7$.

Schütz $c_7$ hindert Schütz $c_5$ über seinen Kontakt $1c_7$ in Nr. 5 an der weiteren Selbsthaltung und somit schließt $1c_5$ in Nr. 7 und ermöglicht $c_7$ die Selbsthaltung.

Über den Kontakt $1c_7$ in Nr. 1 und Nr. 2 wird der Schwingvorschub eingeschaltet.

Der Kontakt $1c_3$ in Nr. 1 ist geschlossen. Dieser Kontakt soll verhindern, daß beide Vorschubarten gleichzeitig eingeschaltet werden können. Die Endschalter $b_1$ und $b_2$ werden nun von der Schalttrommel betätigt und das Ventil 53 versorgt den Längszylinder mit Drucköl in wechselnden Richtungen.

Das Ventil 52 beaufschlagt nun das Mengenregelventil 50. Diese Schaltung ermöglicht es dem Drehen zu einem beliebigen Zeitpunkt die Vorschubart zu wählen.

Die Schütze $c_4$, $c_6$ in Nr. 4 und Nr. 6 speichern die Information. Erst wenn der Nocken 40 den Endschalter $b_3$ betätigt wird die gewünschte Vorschubart über die Schütze $c_5$, $c_7$ eingeschaltet. Die Vorschubarten sind in dieser Schaltung so gegeneinander verriegelt, daß Fehlschaltungen ausgeschlossen sind.

Mit dem erfindungsgemäßen Verfahren wird erstmals methodisch sicher ein gewünschter Spanbruch erreicht. Gleichzeitig kann dieses Verfahren unabhängig von der vom Werkzeug herzustellenden Werkstückkontur angewandt werden.

Eine zur Durchführung des erfindungsgemäßen Verfahrens geeignete Vorrichtung ist verblüffend einfach und es ist in vielen Fällen möglich, bestehende Maschinen und deren Steuerungen so zu ergänzen, daß das erfindungsgemäße Verfahren durchführbar wird.

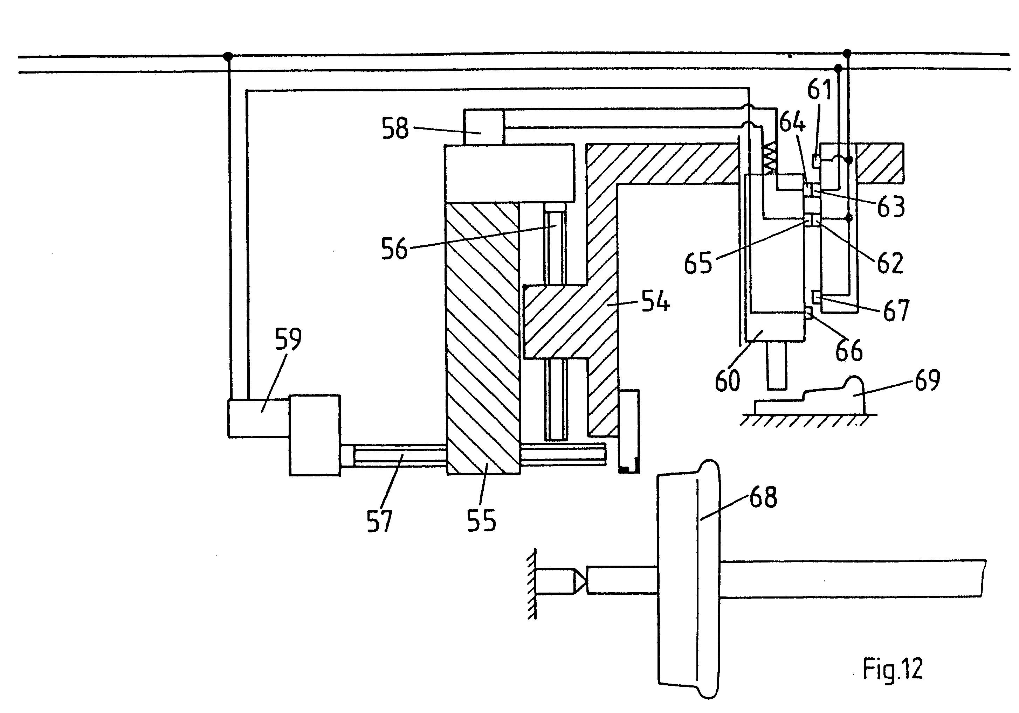

Figur 12 zeigt eine Prinzipskizze eines Kopiersupportes mit elektrischer Kopiersteuerung. Ein Planschlitten 54 wird über eine Spindel 56 bewegt. Die Spindel 56 wird ihrerseits über ein Getriebe von einem Gleichstrommotor 58 angetrieben.

Ein Längsschlitten 55 wird ebenso über eine Spindel 57 und Gleichstrommotor 59 bewegt.

Die Vorschubgröße wird in bekannter Weise über die Stromzufuhr gesteuert. Über einen elektrischen Kopierfühler 60 wird die Planschlittenspindel 56 gesteuert. Die Kontakte 61-65 polen die Zuleitungen des Planschlittenmotors um, je nach erforderlicher Vorschubrichtung (Gleichstrommotoren). Über die Kontakte 66 und 67 wird der Längsvorschub (Motor 59) eingeschaltet.

Der Fühler 60 befindet sich in der gezeichneten Stellung in Grundposition. Der Vorschubmotor 58 bewegt den Planschlitten 54 auf den Radsatz 68 zu, wobei sich der Fühler 60 an eine Schablone 69 anlegt. Diese Planbewegung wird so lange ausgeführt, bis die Kontakte 62-65 getrennt sind. In der Übergangsphase wird der Vorschubmotor der Längsachse bereits eingeschaltet. Sind die Kontakte 62-65 vollständig getrennt, wird über die Kontakte 66 und 67 nur der Längsvorschub eingeschaltet.

Entsprechend der Profilneigung werden die Kontakte am Fühler geschaltet.

Wird zum Beispiel der Fühler weiter gedrückt bei ansteigendem Profil, so werden die Kontakte 64 mit 61 und 65 mit 63 geschaltet. Im Gegensatz zur Grundstellung sind nun die Polaritäten am Vorschubmotor des Planschlittens vertauscht und der Schlitten bewegt sich vom Radsatz 68 weg. Der Planschlitten folgt also dem zu kopierenden Profil.

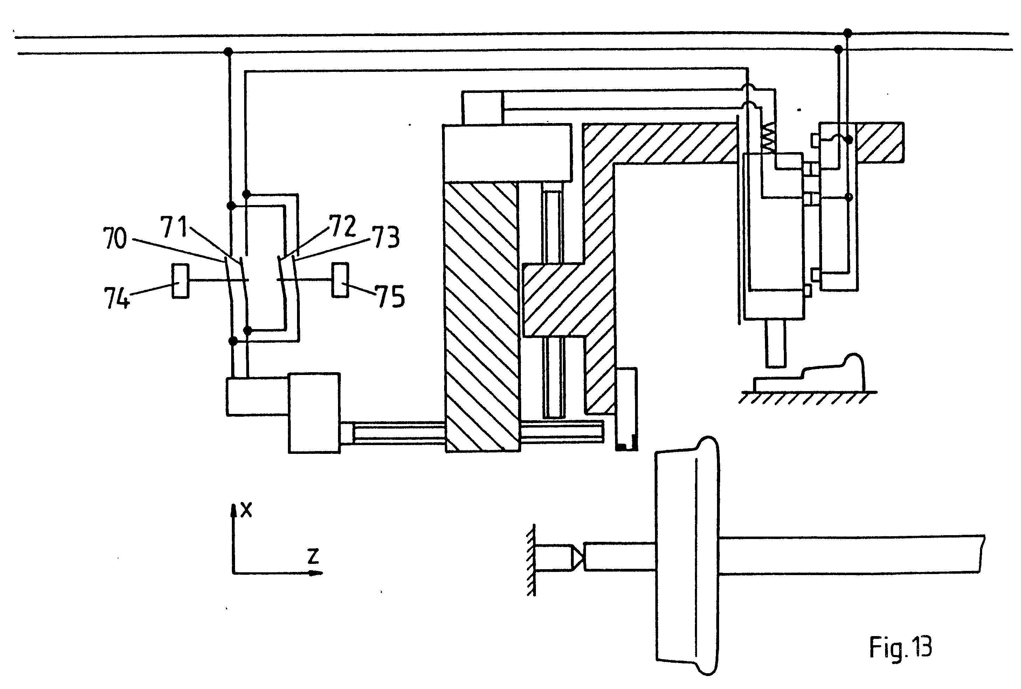

Figur 13 zeigt eine elektrische Kopiersteuerung, die einen Schwingvorschub ausüben kann. Die Schalter 70 und 71 schalten den Längsvorschub in Z-Richtung ein und die Schalter 72 und 73 bewirken einen Vorschub entgegen der Z-Richtung.

Die Schalter 70-73 werden entsprechend Figur 13 durch die Schütze 74 und 75 betätigt, die ihrerseits wiederum über die Schalter $b_1$ und $b_2$ in Figur 6 angesteuert werden. Entsprechend den Befehlen von der Schalttrommel wird nun der Vorschub des Längsschlittens umgesteuert, so daß nun ein Schwingvorschub zustande kommt.

Die Zeitdauer für Vorschub « vor » (Z-Richtung) und Vorschub « zurück » (entgegen Z-Richtung) wird im Verhältnis

$$\frac{1 + 1/z}{1 - 1/z}$$

geschaltet.

Durch die Bewegung in Z-Richtung wird der Fühler 60 entlang der Kopierschablone 69 bewegt und bewirkt hierdurch eine der Profilkontur entsprechende Planbewegung des Schlittens 54. Bei der bisher beschriebenen hydraulischen Kopiersteuerung ist die Schwingung des Planzylinders abhängig von der Neigung der Schablone und der Schwingung des Längszylinders.

Bei einer reinen Planbearbeitung (z. B. Drehen der Planflächen des Radsatzes) kann der Drehprozeß nicht mit schwingendem Vorschub erfolgen, da in diesem Falle der Kopierfühler konstant in einer Schaltstellung bleibt und somit der Planzylinder einen konstanten Vorschub erzeugt.

Das Ventil, das die Schwingbewegung schaltet, wirkt nur auf den Längszylinder und ist somit hier unwirksam. Wird eine kegelige Fläche mit einem großen Neigungswinkel 45° gedreht, ist die Planbewegung während des Schwingvorganges größer als die Längsbewegung. Wird die Steigung des Kegels zu groß, z. B. 80° 90°, ist eine sehr große Auslenkung des Fühlers notwendig, um dem Planzylinder in dem kurzen Zeitraum, der durch die Schwingfrequenz bestimmt ist, mit der nötigen großen Ölmenge zu versorgen.

Nähert man sich mit dem Neigungswinkel der reinen Planrichtung, ist keine saubere Schwingung in tangentialer Richtung zum Profil zu erreichen. Die Auslenkungen des Fühlers werden zu groß und führen zu Abweichungen der Schwingbewegung von der Sollkontur.

Mit den bisher beschriebenen hydraulischen und elektrischen Kopiersystemen können Flächen mit einem großen Neigungswinkel wie z. B. ca. 80° in schwingendem Vorschub bearbeitet werden.

Soll eine Bearbeitung von Kegeln mit sehr großem Neigungswinkel und auch Planflächen mit schwingendem Vorschub erfolgen, muß eine geänderte Kopiersteuerung verwendet werden.

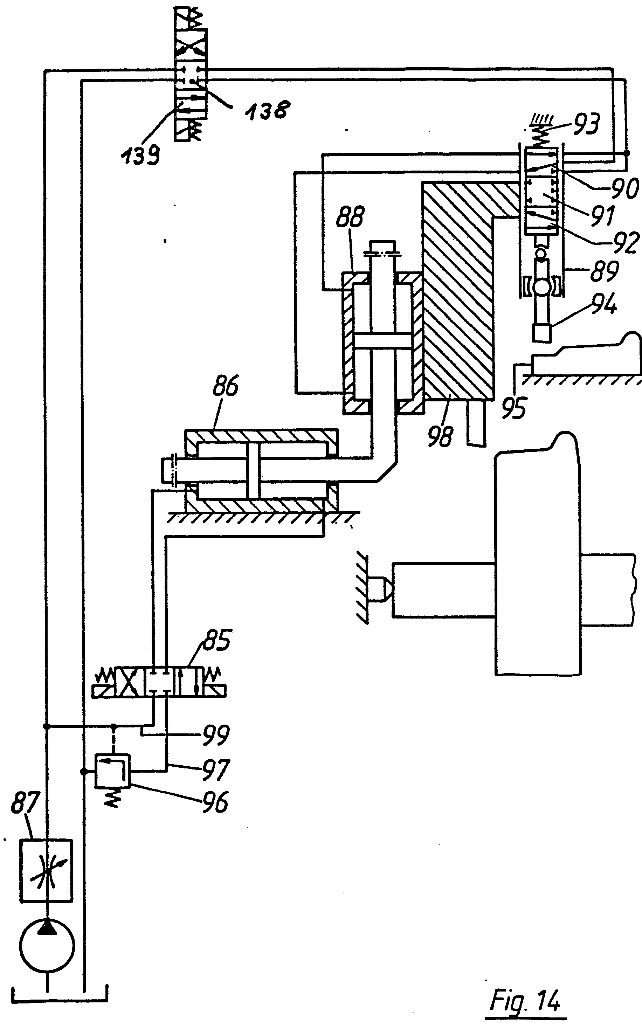

Figur 14 zeigt den Grundaufbau einer solchen Kopiersteuerung, bei der nun ein sog. Vierkanten-Fühler 89 verwendet wird.

Der Längszylinder 86 wird über das Ventil 85 mit Drücköl beaufschlagt.

Je nach Schaltstellung des Ventils 85 kann die generelle Vorschubrichtung, der sog. Leitvorschub «vor» oder «zurück», angewählt werden. Hierbei sei davon ausgegangen, daß das Ventil 138 sich in Schaltstellung 139 befindet.

Über das Ventil 87 wird die gesamte Kopiereinrichtung mit einer definierten Ölmenge versorgt, so daß ein Vorschub in gewünschter Größe entsteht.

Liegt der Tastkopf 94 nicht an der Schablone 95 an, wird mittels der Feder 93 die Ausgangsstellung 90 geschaltet.

Der vom Mengenregelventil 87 abgegebene Ölstrom fließt bei voll geöffneten Fühlersteuerkanten zum Zylinder 88, da das Ventil 96 die Tankleitung 97 sperrt. Das Ventil 96 ist auf einen Öffnungsdruck eingestellt, der weit über dem Verschiebedruck des Zylinders 88 liegt. Der Planzylinder 88 bewegt den Schlitten 98 auf das Radprofil zu, wobei der Kopierfühler 89 mit seinem Tastkopf 94 auf die Schablone 95 aufsetzt und hierdurch langsam die Stellung 91 schaltet.

Werden dabei die Steuerspaltquerschnitte auf einen beliebigen Zwischenwert verkleinert, so steigt in der Zuleitung der Druck und das vom Mengenregelventil 87 unvermindert anstehende, nicht verbrauchte Öl fließt zum Leitvorschubzylinder 86, da das Ventil 96 durch den angestiegenen Druck in der Leitung 99 geöffnet wurde und über die Leitung 97 die Tankverbindung hergestellt wurde.

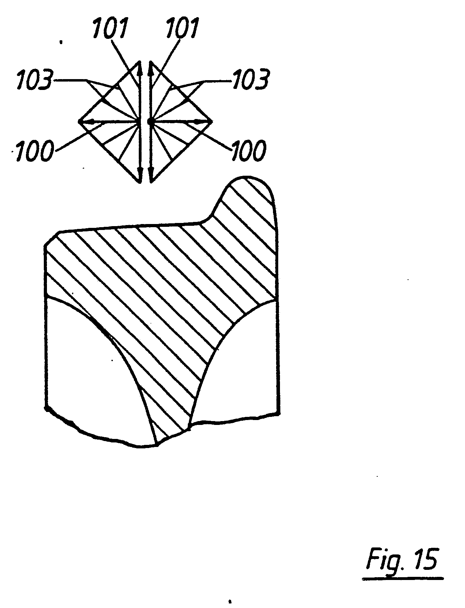

Die Geschwindigkeit des Zylinders 88 wird im Verhältnis des zum Zylinder 86 fließenden Ölstromes kleiner. Der Fühler wird nun entsprechend dem Leitvorschub entlang der Schablone geführt und dabei entsprechend der Schablonenneigung betätigt (Schaltstellungen 90 oder 92), so daß der Planzylinder 88 der Schablonensteigung folgt. Bei gleichen Kolbenflächen in Zylinder 88 und 86 ergibt sich das in Figur 15 gezeigte Geschwindigkeitsdiagramm der resultierenden Bewegung des Supports (Bewegung der Drehmeißelspitze). Der Vektorpfeil 100 gibt die Geschwindigkeit an, wenn nur der Leitvorschub gefahren wird.

Der Pfeil 101 gibt die Geschwindigkeit in reiner Planrichtung (Zylinder 88) an.

Die Pfeile 103 geben die resultierenden Geschwindigkeiten bei zugeordneten Kopierrichtungen an.

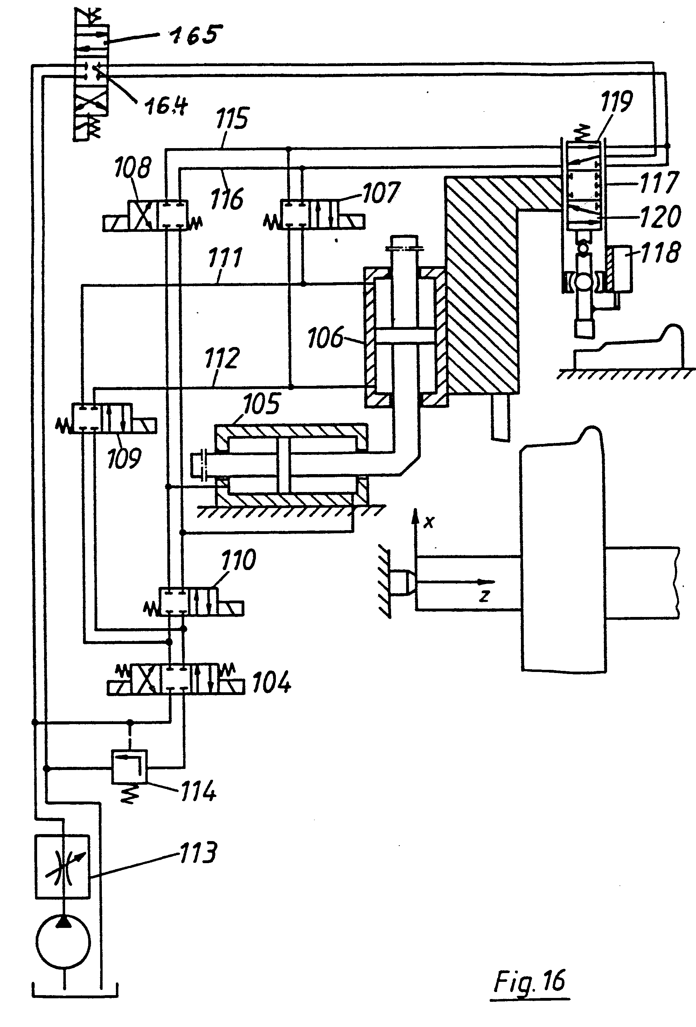

Figur 16 zeigt eine Kopiereinrichtung, die in der Lage ist, einen Schwingvorschub auch bei reinem Planvorschub auszuführen. Die Steuerung erlaubt es, den Längszylinder 105 oder den Planzylinder 106 wahlweise als Leitvorschubzylinder anzuwählen. Der Kopierfühler steuert dann jeweils den anderen Zylinder.

Somit ist es möglich, daß immer der Zylinder vom Kopierfühler gesteuert wird, welcher die geringere Bewegung von beiden Zylindern auszuführen hat.

Solche oder ähnliche Kopiersteuereinrichtungen mit Umschaltung der Zylinderfunktionen sind von Fräsmaschinen als sog. Quadrantensteuerung her bekannt.

Die Umsteuerung der Zylinderfunktionen funktioniert wie folgt.

— Ventil 164 sei in Schaltstellung 165,

— Wird Ventil 108 + 109 auf Sperrstellung geschaltet und Ventil 107 + 110 auf Durchfluß geschaltet, so ist die unter Figur 14 beschriebene Kopiersteuerung gegeben.

Ein Ventil 104 bestimmt die Leitvorschubrichtung und kann zum Steuern des Schwingvorschubes benutzt werden.

Die Ansteuerung dieses Ventils kann wie schon beschrieben, über die Schalttrommel 49 erfolgen.

Soll nun der Planzylinder 106 die Leitvorschubbewegung übernehmen, so muß Ventil 108 und 109 auf Durchfluß geschaltet werden und Ventil 107 und 110 gesperrt werden.

Der Planzylinder 106 wird über die Leitungen 111 und 112 mit Öl versorgt, und erzeugt den Leitvorschub gemäß der Ölmenge, die über das Mengenregelventil 113 vorgegeben ist, wobei die Richtung des Leitvorschubes wiederum von Ventil 104 bestimmt wird. Auch bei dieser Schaltung liegt das Ventil 114 immer in der Tankleitung des Leitvorschubzylinders.

Über die Leitungen 115 und 116 wird der Längszylinder 105 mit dem Kopierfühler 117 verbunden, so daß nun der Längszylinder 105 entsprechend der Schablone nachgeführt wird. Die Umschaltung auf den jeweils anderen Zylinder kann manuell vom Bedienungsmann erfolgen, oder automatisiert werden. Zum Zwecke der Automatisierung wird die Fühlerbewegung während des Schwingvorschubes mittels Wegaufnehmer 118 überwacht.

Wie schon beschrieben, sind die Fühlerwege besonders groß, wenn eine Schwingung entlang eines Profilabschnittes mit großem Neigungswinkel erfolgen soll.

Während des Schwingvorganges wechselt der Fühler 117 zwischen seinen Schaltstellungen 119 und 120. Der Wegaufnehmer 118 wird eine Schwankung zwischen einem Maximal- und einem Minimalwert feststellen und eine schwankende Ausgangsgröße, z. B. eine Spannung, abgeben. Die Differenz zwischen dem Maximal- und Mininalwert muß über eine Steuerung ermittelt und ausgewertet werden. Wird eine bestimmte Fühlerauslenkung überschritten, so wird veranlaßt, daß die Zylinder des Supportes ihre Funktionen tauschen.

Die Festlegung der Größe der Fühlerauslenkung für das Umschalten ist abhängig von den verwendeten Bauteilen und insbesondere von den Zylinderflächen.

In Figur 16 wurden die Flächen beider Zylinder gleich groß gewählt.

Bei der Bearbeitung eines 45°-Kegels werden die Bewegungen für Längs- und Planzylinder gleich groß. Bei gleich großen Kolbenflächen in den Zylindern sind auch die Olströme gleich.

Wird der Neigungswinkel größer als 45°, ist es sinnvoll, den Leitvorschub vom Längszylinder auf den Planzylinder zu wechseln, also bei einem Winkel von z. B. 50°. Unterschreitet man anschließend wieder den Neigungswinkel 45°, so muß der Längszylinder die Leitvorschubfunktion wieder übernehmen.

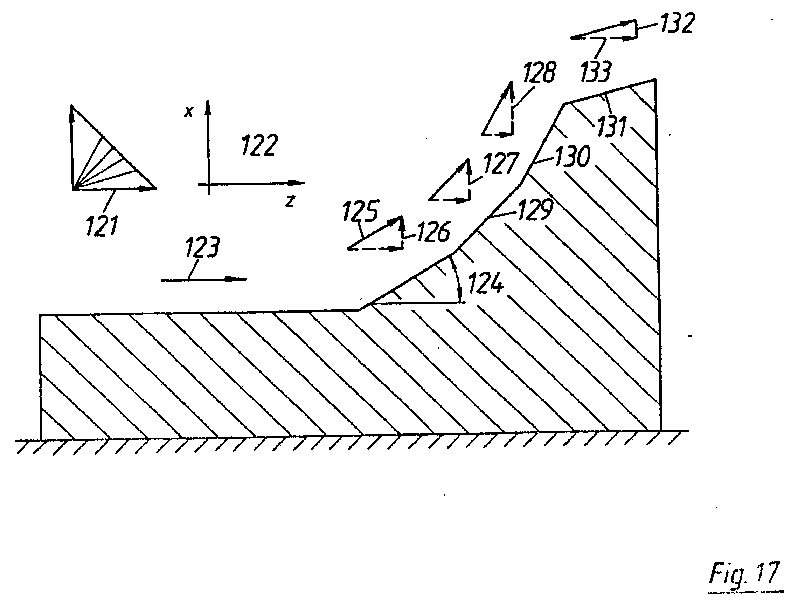

Figur 17 zeigt ein beliebiges Schablonenprofil, welches kopiert werden soll.

Koordinatenkreuz 122 zeigt die Anordnung der Schablone in Bezug auf den gesamten Support und Geschwindigkeitsdiagramm 121 zeigt die Geschwindigkeitsvektoren, die unter einem bestimmten Winkel der Kontur vom Support realisiert werden.

Wird eine rein zylindrische Fläche bearbeitet, ergibt sich Pfeil 123.

Mit zunehmendem Neigungswinkel 124 müssen vom Planzylinder größere Bewegungen gemacht werden. (Pos. 126, 127, 128).

Pfeil 125 zeigt die resultierende Bewegung an einem Kegel mit geringem Neigungswinkel. Die Geschwindigkeiten teilen sich gemäß dem Geschwindigkeitsdiagramm 121 auf.

Im Bereich des zweiten Kegels 129, 45°-Neigung, sind Längs- und Planbewegung gleich groß.

Es ist sinnvoll, den Umschaltpunkt für die Leitvorschubänderung nicht exakt auf einen Kegel mit 45°-Neigung abzustimmen, da der Kopierfühler nach dem Umschalten die gleichen Bewegungen ausführen muß, da beide Zylinder die gleichen Ölmengen verlangen.

Erst wenn der Winkel von z. B. 50°-Neigung überschritten wird, soll eine Umschaltung erfolgen.

Dies ist in dem nächsten Profilabschnitt 130 der Fall. Der Längszylinder wird nun vom Kopierfühler gesteuert. Da der Planzylinder nun den Leitvorschub übernommen hat, kann auch eine reine Planfläche im Schwingvorschub bearbeitet werden.

Im letzten Profilabschnitt 131 ist der Neigungswinkel kleiner 45°. Da eben der Umschaltpunkt auf 50°-Neigungswinkel festgelegt wurde beim Wechsel des Leitungsvorschubes von Längszylinder auf den Planzylinder, wird nun umgeschaltet beim Unterschreiten des Neigungswinkels von 40°, da sich dann die gleichen Bewegungen am Kopierfühler ergeben.

Das Vektoreck verdeutlicht, daß nun die vom Kopierfühler gesteuerte Planbewegung 132 kleiner ist als die Längsbewegung 133.

Das Festlegen der Umschaltpunkte in der eben beschriebenen Weise hat den Vorteil, daß diese Punkte eine exakte Trennung der beiden Zustände (Leitvorschub Längs- oder Planzylinder) hervorrufen.

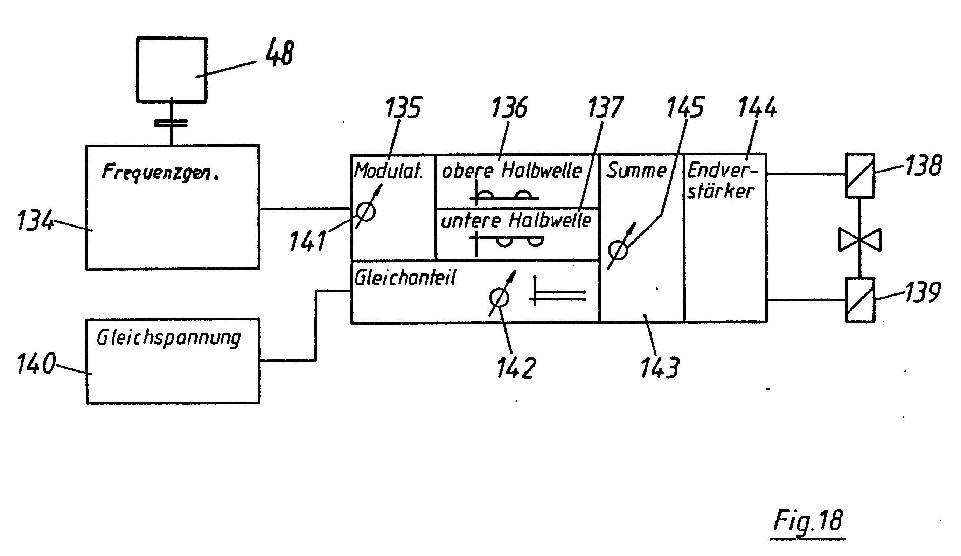

Figur 18 zeigt den schematischen Aufbau einer elektronischen Steuerung für das die Schwingung schaltende Ventil, z. B. 104 in Fig. 16, welche die Schalttrommel ersetzen kann.

Ein Frequenzgenerator 134 liefert ein Schwingsignal. Dieses Signal kann nun im Modulator 135 beliebig verstärkt werden.

Da das Ventil 104, Fig. 16, das für Ansteuerung über Frequenzgenerator ein sog. Proportionalventil sein soll, zwei Magnete besitzt, müssen beide Magnete wechselweise angesteuert werden.

Zu diesem Zweck wird das Schwingsignal in eine positive (obere) 136 und in eine negative (untere) Halbwelle 137 zerlegt, so daß die zwei Magnete des Ventils wechselweise angesteuert werden und damit das Ventil ständig hin- und herschalten.

Die Auslenkungen der Magnete sind, da es sich um ein Proportionalventil handelt, proportional zur Spannung. Der Drehmeißel kann so entlang einer vorgegebenen Kontur schwingen. Für die Bearbeitung des Profils ist es jedoch erforderlich, daß ein gewisser Grundvorschub vorhanden ist. Bei der Schalttrommelsteuerung wird dieser Grundvorschub durch unterschiedlich lange Nocken erreicht, die bewirken, daß das hydraulische Ventil (kein Proportionalventil) in der Schaltstellung « Vorschubstellung vor » länger verharrt als in der anderen Schaltstellung.

Bei der elektronischen Ansteuerung des Ventils kann hierzu dem elektronischen Signal eine Gleichspannung 140 überlagert werden, so daß die Amplitude einer Halbwelle größer und die Amplitude der anderen Halbwelle kleiner wird.

Das Proportionalventil wird entsprechend dieser Signale reagieren und unterschiedlich große Querschnittsöffnungen für den Öldurchsatz freigeben.

Der Gleichspannungsanteil und das Schwingsignal können über die Potentiometer 141 und 142 in das erforderliche Verhältnis gebracht werden, so daß die Amplitude der Schwingbewegung in Richtung des Grundvorschubes (= Leitvorschub)

$$A = s(1 + 1/z)$$

beträgt und in entgegengesetzter Richtung (aus dem Schnitt heraus)

$$A = s(1 - 1/z)$$

beträgt.

Über einen nachgeschalteten Verstärker 143 kann das Signal der positiven und negativen Halbwelle beliebig verstärkt werden, ohne das die Größenverhältnisse der beiden Signale zueinander geändert werden.

Positive und negative Halbwelle werden der Ansteuerelektronik 144 des Ventils zugeführt.

Mit dieser Einrichtung sind praktisch beliebige Vorschubgrößen realisierbar.

Eine Anpassung der Einrichtung auf andere Drehzahlen des Werkstückes ist nun leicht über Summenschalter bzw. Summenpotentiometer 145 und Frequenzgenerator 134 möglich.

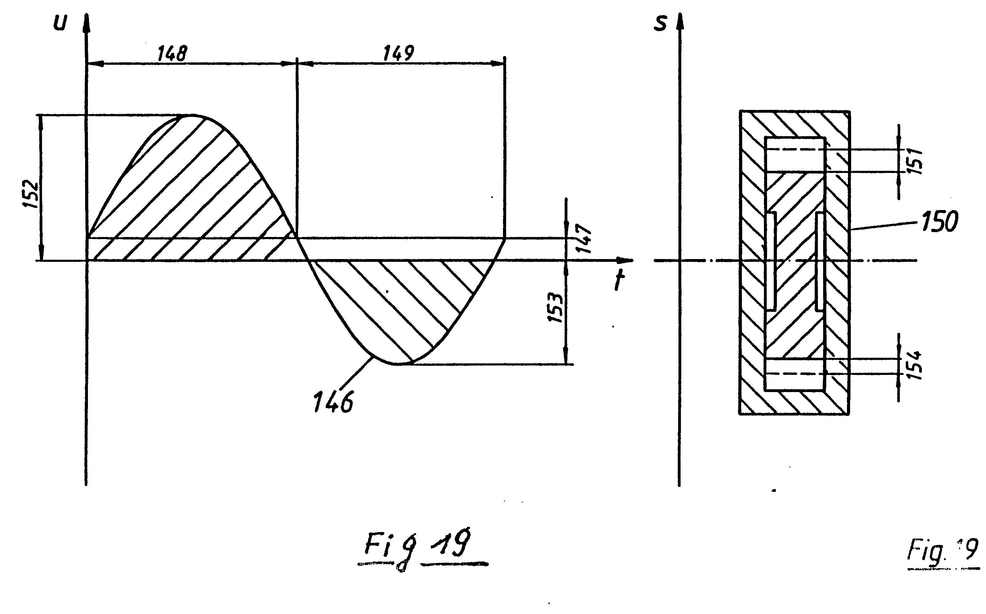

Figur 19 zeigt nochmals das Signal der elektronischen Einrichtung. Dem Sinussignal 146 wird eine Gleichspannung 147 überlagert.

Pos. 148 zeigt die positive und Pos. 149 zeigt die negative Halbwelle.

Diesen beiden Halbwellen 148 und 149 werden getrennt voneinander jeweils einem Magneten zugeführt, nachdem dem Schwingsignal der Gleichspannungsanteil überlagert wurde. Der Kolben des Ventils 104 ist nochmals schematisch dargestellt in 150 (Fig. 19').

Er wird zur einen Seite hin um den maximalen Betrag 151 ausgelenkt werden, der der Amplitude 152 proportional ist.

Zur anderen Seite hin wird der Kolben proportional zur Amplitude 153 um den Betrag 154 ausgelenkt.

Im folgenden wird eine Lösung für eine CNC-Maschine beschrieben.

Eine CNC-Steuerung muß eine Vielzahl von Einflußparametern berücksichtigen :

— Nullpunktverschiebungen,
— Referenzpunkt,
— Werkzeugkorrekturen in Bezug auf Verschleiß,
— Werkzeugkorrekturen in Bezug auf Geometrie des Werkzeuges,
— Schneidenradius,
— Umkehrspiel der Vorschubantriebsspindeln.

Die Berechnung der Schwingpositionen entlang des Profils innerhalb der CNC-Steuerung ist somit zeitaufwendig und ist auch, abhängig von der jeweiligen Position am Profil, unterschiedlich lang.

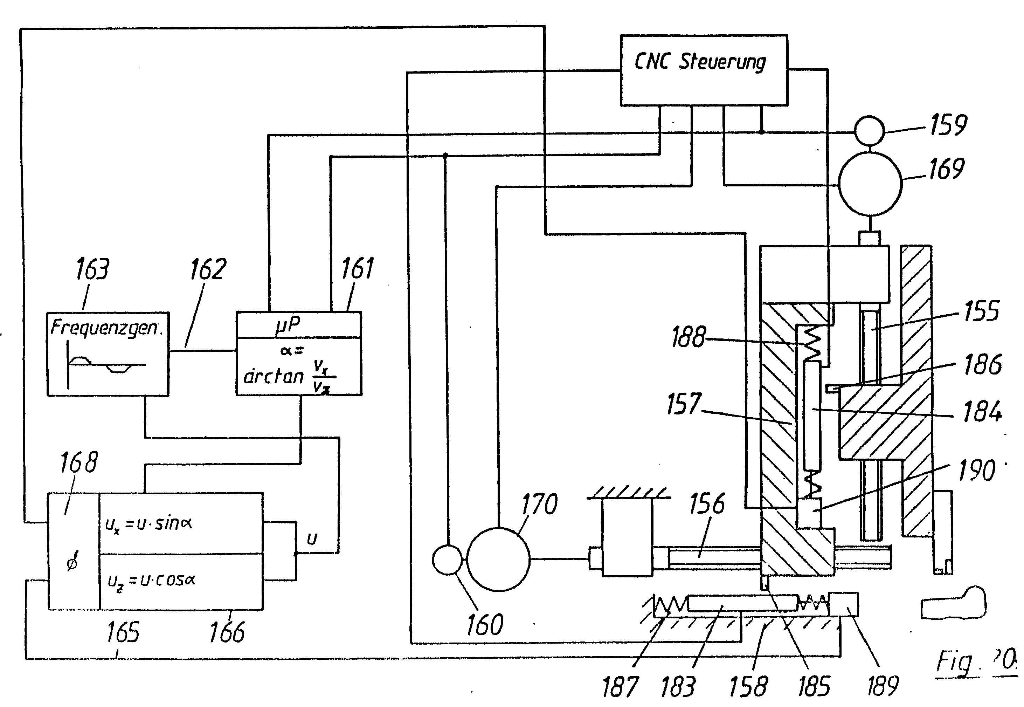

Dieser Zeitbedarf für die Berechnung der Schwingungen kann sehr schnell zu groß werden. Der gesamte Regelkreis kann in Grenzfällen instabil werden. Eine punktweise Programmierung einer Schwingung würde den Aufwand für die Konturbeschreibung und den Speicherplatzbedarf erheblich erhöhen. Um solche Schwierigkeiten zu umgehen, wird direkt in die CNC-Steuerung eingegriffen, sondern die Steuerung wird von außen beeinflußt. In Figur 20 wird eine Möglichkeit, mit der die CNC-Steuerung beeinfluß werden kann, als Beispiel beschrieben.

Die CNC-Achsen 156 und 155 sind mit einem Linear-Wegmeßsystem 158 bzw. 157 ausgerüstet. Das Wegmeßsystem besteht aus je einem Maßstab 183, 184 und je einem Reiter 185, 186, der mit dem jeweils zugeordneten Maßstab in Kontakt steht.

Die Maßstäbe besitzen eine Skala, die technisch verschiedene Ausführungen haben kann, die die Weginformation enthält.

Über die Reiter 185 und 186 wird die Skala der Maßstäbe abgetastet.

Eine bestimmte Position eines Supportschlittens entspricht einer bestimmten Position des Reiters auf dem Maßstab, der im Normalfall räumlich fest angeordnet ist. Wird dieser Maßstab jedoch verschiebbar angebracht, kann die Lage des Meßsystems beliebig verändert werden.

Verschiebt man den Maßstab, so nimmt der Reiter eine andere Position auf dem Maßstab ein und es wird eine neue Ist-Position des Supportschlittens an die CNC-Steuerung gemeldet.

Die neue Ist-Position wird von der CNC-Steuerung als Positionsfehler angesehen und wird von ihr ausgeglichen, bis der Reiter auf dem Maßstab die alte Position, die er vor der Verschiebung hatte, wieder erreicht hat.

Der Supportschlitten hat nun einen Verfahrweg zurückgelegt, der der Verschiebung des Maßstabes entspricht.

In Figur 20 werden die Maßstäbe 183 ; 184 durch Magnetspulen 189 ; 190 verschoben.

Die Magnetspulen werden mit einer periodisch wechselnden Spannung angesteuert, so daß das Meßsystem der CNC-Steuerung einen sich periodisch wechselnden Lagefehler meldet. Da die CNC-Steuerung diesen Lagefehler ausgleicht, folgen die Supportschlitten der Verschiebung des Meßsystems, bis der Lagefehler ausgeglichen ist. Werden die Maßstäbe immer hin und her geschoben, bewegen sich die Schlitten ebenfalls periodisch hin und her.

Sind die Magnetspulen 189 ; 190 stromlos, werden die Maßstäbe über Federn 187, 188 in ihrer Mittellage zentriert.

Für die Schwingung entlang eines Profils wird eine Angabe des Profilneigungswinkels benötigt.

Diese Information erhält man aus den Drehzahlen bzw. den Tachospannungen der Vorschubantriebe 169, 170, die direkt proportional zur Geschwindigkeit der Supportschlitten sind. (Tachos dargestellt durch 159, 160). Fahren die Supportschlitten mit kontinuierlichem Vorschub (ohne Schwingen) entlang eines Profils, kann aus dem Verhältnis der Tachospannungen die Größe des Profilneigungswinkels z. B. durch einen Mikroprozessor 161 errechnet werden. Entsprechend den Schwingungen der beiden Supportschlitten werden auch die zugehörigen Tachospannungen schwingen.

Auch bei schwingenden Tachospannungen gibt es eine Möglichkeit, den Profilneigungswinkel zu ermitteln.

Im Nulldurchgang des Schwingsignals, wenn der Maßstab eine Mittellage, also die normalerweise federzentrierte Lage, durchfährt und dort eine geringe Zeit verharrt, folgt der Support der programmierten Kontur mit der programmierten Vorschubgeschwindigkeit. In diesem Moment schwingen die Tachospannungen nicht und können für die Berechnung des Profilneigungswinkels abgegriffen werden.

Der Mikroprozessor ist über Leitung 162 mit dem Frequenzgenerator 163 verbunden und erhält über diese Leitung vom Frequenzgenerator 163 jeweils bei Null-Lage des Schwingsignals ein Kommando zur Ermittlung der Profilsteigung. Das Signal vom Frequenzgenerator wird in der Einrichtung 166 für beide Achsen aufgetrennt.

Entsprechend dem über den Mikroprozessor ermittelten Neigungswinkel werden die Schwingungsamplituden der x-Achse und der z-Achse verändert. Der Mikroprozessor gibt dazu ein elektrisches Signal ab, welches dem Neigungswinkel entspricht.

Die Spannungen $U_x$ und $U_z$ sollen entsprechend dem Profilneigungswinkel im Verhältnis $Ux/Uz = \sin\alpha/\cos\alpha$ stehen.

Über einen Verstärker 168 können beide Spannungen nochmals vergrößert oder verkleinert werden, ohne ihr Verhältnis zueinander zu verändern. Die Amplitude der Schwingung kann somit eingestellt werden.

Die CNC-Steuerung bietet die Möglichkeit, über das Bearbeitungsprogramm die Einstellung des Verstärkers 168 zu beeinflussen. Entsprechend programmierter Befehle können somit die Schwingbewegungen variiert oder geschaltet werden, um an Konturstellen mit kleinen Radien Formfehler zu vermeiden.

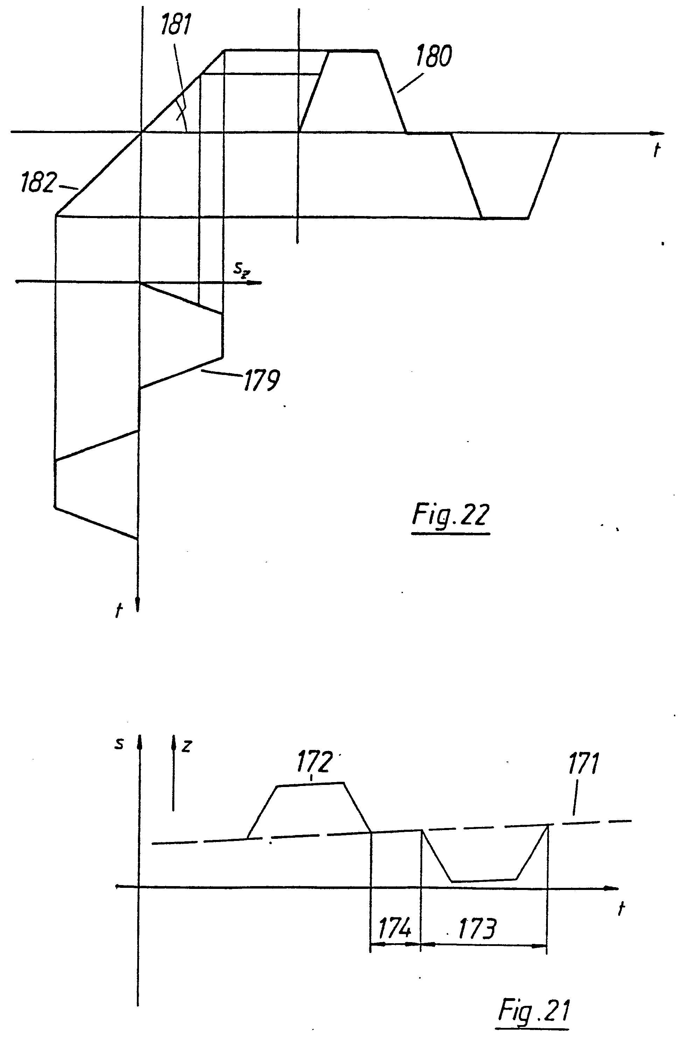

Figur 21 zeigt im Prinzip nochmals graphisch den geschilderten Schwingvorgang. Es wurde hier die Vorschubbewegung S in z-Richtung über die Zeit dargestellt. Die gestrichelte Linie 171 entspricht dem einprogrammierten Weg des Werkzeuges in z-Richtung.

Diesem Grundvorschub wird die Schwingbewegung 172 durch die Beeinflussung des Wegmeßsystems überlagert.

Im Zeitraum wird vom Frequenzgenerator (Pos. 163, Fig. 20) der Schwingvorgang bewußt unterbrochen. Während dieses Zeitraumes müssen von dem Mikroprozessor die Tachospannungen abgegriffen werden. Das Bild der Vorschubbewegung in x-Richtung sieht qualitativ gleich aus, so daß zum gleichen Zeitpunkt auch die Tachospannungen der x-Achse ermittelt wird.

Im Zeitraum 174 muß auch der Neigungswinkel $\alpha$ berechnet werden, damit im Zeitraum 173 eine Berücksichtigung des Neigungswinkels erfolgen kann.

Liste der verwendeten Bezugszeichen

1 Längsführung des Bettes
2 Längsschlitten
3 Kolben-Zylinder-Einheit
4 Planschlitten
4' Planschlitten
5 Werkzeug
5' Werkzeug
6 Planzylinder
7 Fühler
8 Planschlitten
9 Längszylinder
9' Zylinderraum
9" Zylinderraum
10 Zylinderraum
11 Zylinderraum
12 Schaltstellung des Fühlers

13 Schaltstellung des Fühlers
14 Schaltstellung des Fühlers
15 Schablone
16 4/3-Wegeventil
17 Schaltstellung des Wegeventils
18 Schaltstellung des Wegeventils
19 Druckleitung
19' Druckleitung
19" Druckleitung
20 druckgesteuertes Sperrventil
21 Halbperiode
22 Vorschubrille der Schwingbewegung
23 Vorschubrille des kontinuierlichen Vorschubs
24 Umfang des Rades
25 kontinuierlicher Vorschub
26 Vorschubweg
27 Punkt
28 Punkt
29 Punkt
30 Vorschubweg
31 Amplitude der Schwingbewegung
32 Schneidrichtung
33 Vorschubrichtung « vor »
34 Radsatzumfang
35 Wellenlänge
36 Wellenlänge
37 Wellenlänge
38 Trommel
39 Welle
40 Schaltnocken
41 Schaltnocken
42 Schaltnocken
43 Endschalter
44 Pfeil
45 Trommelumfang
46 Drehrichtung
47 Planscheibe
48 Schaltgetriebe
49 Schalttrommel
50 Mengenregelventil
51 Mengenregelventil
52 Ventil
53 Ventil
54 bis 75 unbenutzt
76 Rad eines Radsatzes
76' Rad eines Radsatzes
77 Radsatzwelle
78 Körnerspitze
78' Körnerspitze
79 Widerlager
79' Widerlager
80 Druckquelle
80' Druckquelle
81 Tankleitung
81' Tankleitung
82 Steuerleitung
83 Ventil
84 Tank
85 Ventil
86 Längszylinder
87 Ventil
88 Zylinder
89 Vierkanten-Fühler
90 Ausgangsstellung
91 Ventil

13

92 Schaltstellung
93 Feder
94 Tastkopf
95 Schablone
96 Ventil
97 Tankleitung
98 Schlitten
99 Leitung
100 Vektorpfeil
101 Pfeil
102 Schaltstellung
103 Pfeile
104 Ventil
105 Längszylinder
106 Planzylinder
107 Ventil
108 Ventil
109 Ventil
110 Ventil
111 Leitung
112 Leitung
113 Mengenregelventil
114 Ventil
115 Leitung
116 Leitung
117 Fühler
118 Wegaufnehmer
119 Schaltstellung
120 Schaltstellung
121 Geschwindigkeitsdiagramm
122 Koordinatenkreuz
123 Pfeil
124 Neigungswinkel
125 Pfeil
126 Positionen
127 Positionen
128 Positionen
129 Kegel
130 Profilabschnitt
131 Profilabschnitt
132 Planbewegung
133 Längsbewegung
134 Frequenzgenerator
135 Modulator
136 Halbwelle
137 Halbwelle
138 Ventil
139 Schaltstellung
140 Gleichspannung
141 Potentiometer
142 Potentiometer
143 Verstärker
144 Ansteuerelektronik
145 Summenpotentiometer
146 Sinussignal
147 Gleichspannung
148 Halbwelle
149 Halbwelle
150 Kolben
151 Betrag
152 Amplitude
153 Amplitude
154 Betrag
155 CNC-Achse
156 CNC-Achse

157 Wegmeßsystem
158 Wegmeßsystem
159 Tachogenerator
160 Tachogenerator
161 Mikroprozessor
162 Leitung
163 Frequenzgenerator
164 Ventil
165 Schaltstellung
166 Einrichtung
167 unbenutzt
168 Verstärker
169 Vorschubantrieb
170 Vorschubantrieb
171 Linie
172 Schwingbewegung
173 Zeitraum
174 Zeitraum
175 unbenutzt
176 unbenutzt
177 unbenutzt
178 unbenutzt
179 unbenutzt
180 unbenutzt
181 unbenutzt
182 unbenutzt
183 Maßstab
184 Maßstab
185 Reiter
186 Reiter
187 Feder
188 Feder
189 Magnetspule
190 Magnetspule

**Patentansprüche**

1. Verfahren zur Erzeugung von Bruchspänen bei der Drehbearbeitung von Werkstücken mittels einer sich im Verlauf der Werkstückumdrehung verändernden Vorschubgeschwindigkeit des Drehwerkzeuges (5 ; 5'), dadurch gekennzeichnet, daß das Werkzeug (5 ; 5') entlang der Linie der die Werkstückkontur erzeugenden Vorschubvektoren schwingt, wobei die Schwingungsamplitude (31, Fig. 4) etwa dem halben effektiven Vorschubweg pro Umdrehung (25, Fig. 4) entspricht und die Wellenlänge (35, Fig. 5) der Schwingung so bemessen ist, daß sie selbst oder ihr ganzzahliges Vielfaches zuzüglich einer halben Wellenlänge (21, Fig. 4) stets gleich ist dem jeweiligen momentanen Werkstückumfang durch den betrachteten Arbeitspunkt.

2. Dreheinrichtung mit einem Support zur Durchführung des Verfahrens nach Anspruch 1, wobei der Support mit mindestens einem angetriebenen Längs- (2 ; 55) und Planschlitten (4 ; 4' ; 54) zur Bewegung des Drehwerkzeuges (5 ; 5') ausgerüstet ist, deren Antriebe (6,9 ; 58, 59 Fig. 12 ; 105, 106 Fig. 16 ; 169, 170, Fig. 20) von einer Steuereinrichtung gesteuert werden, dadurch gekennzeichnet, daß Mittel zur Erzeugung einer periodischen Schwingbewegung vorgesehen sind, die derart mit der Steuereinrichtung zusammenwirken, daß die erzeugte Schwingbewegung an jedem Punkt entlang der Linie der die Werkstückkontur erzeugenden Vorschubvektoren erfolgt, wobei weiter Mittel zur Einstellung der Amplitude und der Frequenz der Schwingbewegung vorgesehen sind.

3. Einrichtung nach Anspruch 2, dadurch gekennzeichnet, daß Mittel zur Erfassung der Drehzahl einer Hauptspindel vorgesehen sind, die derart mit den Mitteln zur Einstellung der Frequenz der Schwingbewegung verknüpft oder verknüpfbar sind, daß eine Veränderung der Drehzahl der Hauptspindel eine proportionale Veränderung der Frequenz der Schwingbewegung bewirkt (Fig. 6-9 und 18, 20).

4. Einrichtung nach einem der Ansprüche 2 bis 3, dadurch gekennzeichnet, daß die Mittel zur Erzeugung der Schwingbewegung in Abhängigkeit von der Drehzahl der Hauptspindel (47) zwangsgesteuert sind, wobei die Frequenz der Schwingbewegung als Schwingung pro Hauptspindelumdrehung einstellbar ist.

5. Einrichtung nach einem der Ansprüche 2 bis 4, dadurch gekennzeichnet, daß eine die Drehzahl und den Drehwinkel der Hauptspindel (47) erfassende Signaleinrichtung vorgesehen ist, die in Abhängigkeit von Drehzahl und Drehwinkel der Hauptspindel Steuerimpulse an die Mittel zur Erzeugung

0 197 172

der Schwingbewegung abgibt, wobei die über eine Umdrehung der Hauptspindel anfallenden Steuerimpulse an der Signaleinrichtung so aufteilbar sind, daß hierdurch die Mittel zur Erzeugung der Schwingbewegung (2n + 1) Halbschwingungen durchführen, wobei « n » eine ganze Zahl ist.

6. Einrichtung nach Anspruch 2, wobei die Steuereinrichtung eine CNC-Steuerung ist (Fig. 20), die mit einem Wegmeßsystem (157, 158, Fig. 20) für jeden Schlitten zusammenarbeitet, das mindestens je aus einem Maßstab (184, 183) und einem dem Maßstab zugeordneten Reiter (186, 185) zur Wegabfrage am Maßstab besteht, gekennzeichnet durch Mittel (189, 187 ; 190, 188) zur Erzeugung einer alternierenden Relativbewegung zwischen Maßstab (183, 184) und Reiter (185, 186) wobei die Mittel mindestens über einen Frequenzgenerator (163) miteinander koordiniert sind.

7. Einrichtung nach Anspruch 6, dadurch gekennzeichnet, daß die Mittel zur Erzeugung der alternierenden Relativbewegung als Magnetspulen (189, 190) mit entsprechenden Ankern ausgebildet sind.

8. Einrichtung nach einem der Ansprüche 6 und 7, dadurch gekennzeichnet, daß das über die Magnetspulen (189, 190) bewegte Teil (183, 184) des Wegmeßsystems in stromlosem Zustand der Magnetspule in Mittelstellung zentriert ist, wobei die Mittelstellung die Bezugsstellung für die Weginformation der CNC-Steuerung bildet.

9. Einrichtung nach einem der Ansprüche 7 bis 8, dadurch gekennzeichnet, daß zwischen Frequenzgenerator (163) und Magnetspulen (189, 190) eine Einrichtung (166) zur Aufteilung des vom Frequenzgenerator ankommenden Signals auf die Magnetspulen (189, 190) vorgesehen ist, wobei die Aufteilung in Abhängigkeit vom augenblicklichen Steigungswinkel (124, Fig. 17) des herzustellenden Profils erfolgt.

10. Einrichtung nach einem der Ansprüche 2 bis 5 mit einem hydraulisch gesteuerten Kopiersupport (Fig. 3 ; Fig. 10), bei dem mittels eines fühlergesteuerten Kopierventils ein den Geschwindigkeitsvektor des Drehwerkzeuges (5, 5') bestimmender und regelbarer Gesamtölstrom auf je eine den Längsschlitten (2) und den Planschlitten (8) antreibende Kolben-Zylinder-Einheit (6, 9) aufgeteilt wird, dadurch gekennzeichnet, daß eine Schalttrommel (38 Fig. 6 ; 49 Fig. 9) vorgesehen ist, die mit der Hauptspindel (47) in Antriebsverbindung steht, in einer solchen Übersetzung, daß pro Schwingung des Werkzeuges (5, 5') eine Umdrehung der Schalttrommel (38) erfolgt, wobei die Schalttrommel (38) mindestens zwei Nockenbahnen mit Nocken (40, 41, 42) aufweist, von denen zugeordnete Schalter (43, 61, 62, 63) betätigt werden, wovon über die zugeordneten Schalter die eine Nockenbahn das Signal « Vorschub vor » und die andere Nockenbahn « Vorschub zurück » abgibt, wobei das Signal « vor » etwa den (1 + 1/n)-fachen Wert des Grundvorschubes (25) und das Signal « zurück » etwa den (1 − 1/n)-fachen Wert des Grundvorschubes (25) an der Einrichtung zur Erzeugung der Schwingbewegung ansteht.

11. Einrichtung nach Anspruch 10, dadurch gekennzeichnet, daß in der Antriebsverbindung von Hauptspindel und Schalttrommel ein Schaltgetriebe (48 Fig. 9) vorgesehen ist.

12. Einrichtung nach einem der Ansprüche 10 und 11, wobei die Kolben-Zylinder-Einheit für die Planbewegung in der einen Zylinderkammer direkt mit einer Druckquelle und in der anderen Zylinderkammer über ein Fühlerventil mit der Druckquelle verbunden ist und wobei die Kolben-Zylinder-Einheit für die Längsbewegung in der einen Zylinderkammer direkt mit der Druckquelle und in der anderen Zylinderkammer mit dem Tank verbunden ist, dadurch gekennzeichnet, daß die Verbindungsleitung der Kolben-Zylindereinheit für die Längsbewegung durch eine Einrichtung (16 ; 53 Fig. 3 ; Fig. 10) zum Sperren und Vertauschen der Ölströme geführt sind, wobei die Tankleitung durch ein druckgesteuertes Sperrventil geführt ist, dessen Steuerleitung direkt mit der Druckquelle (80') verbunden ist.

13. Einrichtung nach Anspruch 12, dadurch gekennzeichnet, daß die Einrichtung zum Sperren und Vertauschen der Ölströme als Vier-Wege-Drei-Stellungsventil (16 ; 53) ausgebildet ist.


**Claims**

1. Method for producing separated chips while turning work pieces, by means of a varying feed advance velocity of the lathe tool (5, 5') during the rotation of the work piece, characterized in that the tool (5, 5') oscillates along the line of the feed advance vectors which produce the contour of the work piece, whereby the amplitude of oscillation (31, Fig. 4) corresponds approximately to half of the effective feed advance path per rotation (25, Fig. 4) and the wave length (35, Fig. 5) of the oscillation is such that it itself or its integral multiple, plus a half wave length (21, Fig. 4), is always equal to the respective momentary circumference of the work piece through the current work point.

2. Turning apparatus with a support for carrying out the method according to claim 1, whereby the support is equipped with at least one driven lengthwise carriage (2 ; 55) and one driven crosswise carriage (4 ; 4' ; 54) for moving the lathe tool (5 ; 5'), the drives of which (6,9 ; 58, 59 Fig. 12 ; 105, 106 Fig. 16 ; 169, 170, Fig. 20) are controlled by a control device, characterized in that means for producing periodic oscillatory motion are provided which cooperate with the control device in such a way that the achieved oscillatory motion at each point along the line of the feed advance vectors which produce the contour of the work piece, whereby further means for adjusting the amplitude and the frequency of the oscillatory motion are provided.

3. Apparatus according to claim 2, characterized in that means are provided for determining the

16

rotational velocity of a main spindle, which are coupled or are coupleable to the means for adjusting the frequency of the oscillatory motion in such a way that a change in the rotational speed of the main spindle effects a proportional change in the frequency of the oscillatory motion (Fig. 6-9 and 18, 20).

4. Apparatus according to one of the claims 2 to 3, characterized in that the means for producing the oscillatory motion are positively controlled in dependence on the rotational velocity of the main spindle (47), whereby the frequency of the oscillatory motion is adjustable as an oscillation per rotation of the main spindle.

5. Apparatus according to one of the claims 2 to 4, characterized in that a signal device is provided for determining the rotational velocity and the angle of rotation of the main spindle (47) which gives control impulses to the means for producing the oscillatory motion dependent on the rotational velocity and the angle of rotation, whereby the control impulses supplied during one rotation of the main spindle can be distributed at the signal device in such a way that hereby the means for producing the oscillatory motion (2n + 1) carry out half oscillations, whereby « n » is a whole number.

6. Apparatus according to claim 2, whereby the control device is a CNC-control (Fig. 20) which cooperates with a path distance measuring system (157, 158, Fig. 20) for each carriage that consists of at least one measuring rule (184, 183) and a related slider (186, 185) for sensing the path distance, characterized by means (189, 187 ; 190, 188) for producing an alternating relative motion between the measuring rule (183, 184) and the slider (185, 186) whereby the means are coordinated with each other by at least one frequency generator (163).

7. Apparatus according to claim 6, characterized in that the means for producing the alternating relative motion are in the form of magnetic coils (189, 190) with corresponding armatures.

8. Apparatus according to one of the claims 6 and 7, characterized in that the part (183, 184) of the path distance measuring system moved by means of the magnetic coils (189, 190) is centered in a middle position when the magnetic coils are in a currentless state, whereby the middle position is the reference position for the path distance information of the CNC-control.

9. Apparatus according to one of the claims 7 to 8, characterized in that a device (166) for dividing the signal received from the frequency generator between the magnetic coils (189, 190) is provided between the frequency generator (163) and the magnetic coils (189, 190), whereby the division is achieved in dependence on the momentary slope angle (124, Fig. 17) of the contour profile being produced.

10. Apparatus according to one of the claims 2 to 5 with a hydraulically controlled copying support (Fig. 3, Fig. 10) in which a controllable total oil stream, determining the velocity vector of the lathe tool (5, 5'), is distributed by means of a feeler controlled copy valve to piston cylinder units (6, 9) which each respectively drive the lengthwise carriage (2) and the crosswise carriage (8), characterized in that a switching drum (38 Fig. 6 ; 49 Fig. 9) is provided which is drive-connected to the main spindle (47) with such a drive ratio that the switching drum (38) completes one rotation per oscillation of the lathe tool (5, 5'), whereby the switching drum (38) has at least two cam paths with cams (40, 41, 42) which activate switches (43, 61, 62, 63), whereby one cam path supplies the signal « feed advance forward » by means of the related switch, and the other cam path supplies the signal « feed advance reverse », whereby the signal « forward » supplies approximately the (1 + 1/n) multiple value of the fundamental feed advance (25) and the signal « reverse » supplies approximately the (1 − 1/n) multiple value of the fundamental feed advance (25) to the device for producing the oscillatory motion.

11. Apparatus according to claim 10, characterized in that a shiftable gear transmission (48 Fig. 9) is provided in the drive-connection between the main spindle and the switching drum.

12. Apparatus according to one of the claims 10 and 11, whereby one cylinder chamber of the piston cylinder unit for the crosswise motion is directly connected to a pressure source and the other cylinder chamber is connected to the pressure source through a feeler valve, and whereby one cylinder chamber of the piston cylinder unit for the lengthwise motion is directly connected to the pressure source and the other cylinder chamber is connected to the reservoir, characterized in that the connection lines of the piston cylinder unit for the lengthwise motion are directed through an arrangement (16 ; 53 Fig. 3 ; Fig. 10) for blocking and exchanging the oil streams, whereby the reservoir line is directed through a pressure controlled blocking valve the control line of which is directly connected to the pressure source (80').

13. Apparatus according to claim 12, characterized in that the arrangement for blocking and exchanging the oil streams is in the form of a four-path three-position valve (16 ; 53).

**Revendications**

1. Procédé pour l'obtention de copeaux brisés lors du tournage de pièces à usiner, au moyen d'une vitesse d'avance de l'outil de tournage (5, 5'), variable au cours de la rotation de la pièce à usiner, caractérisé en ce que l'outil (5, 5') oscille le long de la ligne des vecteurs d'avance définissant le contour de la pièce à usiner, l'amplitude des oscillations (31, Fig. 4) correspondant approximativement à la moitié du trajet d'avance effectif pour chaque rotation (25, Fig. 4), et la longueur d'onde (35, Fig. 5) de l'oscillation étant calculée de telle façon que cette longueur d'onde ou un multiple entier de cette dernière, plus une demi-longueur d'onde (21, Fig. 4), soit toujours égal à la circonférence respective instantanée de la pièce à usiner passant par le point de travail considéré.

2. Dispositif de tournage comportant un support pour la mise en œuvre du procédé selon la revendication 1, dans lequel le support est équipé d'au moins un chariot longitudinal (2 ; 55) et d'au moins un chariot plan (4 ; 4' ; 54) entraînés pour déplacer l'outil de tournage (5, 5') et dont les dispositifs d'entraînement (6, 9 ; 58, 59 Fig. 12 ; 105, 106 Fig. 16 ; 169, 170, Fig. 20) sont commandés par un dispositif de commande, caractérisé en ce que des moyens sont prévus pour engendrer un mouvement oscillatoire périodique, ces moyens coopérant avec le dispositif de commande de telle façon que le mouvement oscillatoire produit ait lieu en chaque point le long de la ligne des vecteurs d'avance définissant le contour de la pièce à usiner, d'autres moyens étant prévus pour régler l'amplitude et la fréquence du mouvement oscillatoire.

3. Dispositif selon la revendication 2, caractérisé en ce que des moyens sont prévus pour délecter la vitesse de rotation d'une broche principale, ces moyens étant ou pouvant être combinés aux moyens de réglage de la fréquence du mouvement oscillatoire de telle façon qu'une modification de la vitesse de rotation de la broche principale provoque une variation proportionnelle de la fréquence du mouvement oscillatoire (Fig. 6-9 et 18, 20).

4. Dispositif selon l'une des revendications 2 à 3, caractérisé en ce que les moyens de génération du mouvement oscillatoire sont commandés, d'une manière forcée, en fonction de la vitesse de rotation de la broche principale (47), la fréquence du mouvement oscillatoire étant réglable en tant qu'oscillation pour chaque rotation de la broche principale.

5. Dispositif selon l'une des revendications 2 à 4, caractérisé en ce qu'il est prévu un dispositif de signalisation détectant la vitesse de rotation et l'angle de rotation de la broche principale (47), lequel envoie, en fonction de la vitesse de rotation et de l'angle de rotation de la broche principale, des impulsions de commande aux moyens de génération du mouvement oscillatoire, les impulsions de commande qui apparaissent dans le dispositif de signalisation pendant une rotation de la broche principale étant répartissables de telle façon que les moyens de génération du mouvement oscillatoire exécutent, de ce fait, $(2n + 1)$ demi-oscillations, « n » étant un nombre entier.

6. Dispositif selon la revendication 2, dans lequel le dispositif de commande est une commande numérique à calculateur (CNC) (Fig. 20), qui coopère avec un système de mesure de distance (157, 158, Fig. 20) pour chaque chariot, constitué chacun par au moins une échelle graduée (184, 183) et un curseur (186, 185) associé à l'échelle graduée pour indiquer la distance sur l'échelle graduée, caractérisé par des moyens (189, 187 ; 190, 188) pour engendrer un déplacement relatif alternatif entre l'échelle graduée (183, 184) et le curseur (185, 186), les moyens étant coordonnés entre eux au moins par l'intermédiaire d'un générateur de fréquence (163).

7. Dispositif selon la revendication 6, caractérisé en ce que les moyens pour engendrer le déplacement relatif alternatif sont réalisés sous la forme de bobines magnétiques (189, 190) munies d'induits correspondants.

8. Dispositif selon l'une des revendications 6 et 7, caractérisé en ce que la partie (183, 184) du système de mesure de déplacement, qui est déplacée par l'intermédiaire des bobines magnétiques (189, 190) est centrée en position médiane, lorsque la bobine magnétique n'est pas alimentée en courant, la position médiane constituant la position de référence pour l'information de distance de la commande numérique à calculateur.

9. Dispositif selon l'une des revendications 7 à 8, caractérisé en ce qu'entre le générateur de fréquence (163) et les bobines magnétiques (189, 190), se trouve un dispositif (166) destiné à répartir entre les bobines magnétiques (189, 190) le signal provenant du générateur de fréquence, la répartition s'effectuant en fonction de l'angle instantané de la pente (124, Fig. 17) du profil à réaliser.

10. Dispositif selon l'une des revendications 2 à 5, comportant un support de copiage (Fig. 3 ; Fig. 10) à commande hydraulique, dans lequel un écoulement global réglable d'huile, déterminant le vecteur vitesse de l'outil de tournage (5, 5'), est réparti, au moyen d'une vanne de copiage commandée par un capteur, entre chaque unité à piston et cylindre (6, 9) entraînant le chariot longitudinal (2) et le chariot plan (8), caractérisé en ce qu'un tambour de commutation (38 Fig. 6 ; 49 Fig. 9) est prévu, lequel est en liaison d'entraînement avec la broche principale (47), avec une démultiplication telle qu'une révolution du tambour de commutation (38) se produit à chaque oscillation de l'outil (5, 5'), le tambour de commutation (38) possédant au moins deux pistes à cames comprenant des cames (40, 41, 42) par lesquelles sont actionnés des interrupteurs associés (43, 61, 62, 63) et à partir desquelles, par l'intermédiaire des interrupteurs associés, l'une des pistes à cames délivre le signal « translation dans la direction avant » et l'autre piste à cames délivre le signal « translation dans la direction arrière », le signal « direction avant » appliquant approximativement la valeur égale à $(1 + 1/n)$ fois l'avance de base (25), et le signal « direction arrière » approximativement la valeur égale à $(1 - 1/n)$ fois l'avance de base (25), au dispositif de génération du mouvement oscillatoire.

11. Dispositif selon la revendication 10, caractérisé en ce qu'un mécanisme de changement de vitesse (48, Fig. 9) est prévu dans la liaison d'entraînement entre la broche principale et le tambour de commutation.

12. Dispositif selon l'une des revendications 10 et 11, dans lequel l'unité à piston et cylindre utilisée pour le déplacement dans le plan a une chambre cylindrique reliée directement à une source de pression et sa seconde chambre cylindrique reliée à la source de pression par l'intermédiaire d'une vanne de détection, et dans lequel l'unité à piston et cylindre utilisée pour le déplacement longitudinal a une chambre cylindrique reliée directement à la source de pression et sa seconde chambre cylindrique reliée à la bâche, caractérisé en ce que la canalisation de liaison de l'unité à piston et cylindre servant au déplacement longitudinal est pilotée par un dispositif (16, 53 Fig. 3 ; Fig. 10) servant à stopper et à permuter les écoulements d'huile, la canalisation aboutissant au réservoir étant pilotée par une vanne d'arrêt commandée par pression, dont la canalisation de commande est reliée directement à la source de pression (80').

13. Dispositif selon la revendication 12, caractérisé en ce que le dispositif servant à stopper et à permuter les écoulements d'huile est réalisé sous la forme d'une vanne à trois positions et à quatre voies (16 ; 53).

Fig. 1

Fig. 2

Fig.3

0 197 172

Fig.4a

Fig.4

I

35   35

II

36   36

III

37   37

34

Fig. 5

0 197 172

Fig. 6

II

42

44

40

41

38

II

*Fig.7*

Fig.8

0 197 172

Fig. 9

Fig. 10

0 197 172

Fig.11

Fig.12

Fig. 13

70 71 72 73 74 75

0 197 172

Fig. 14

*Fig. 15*

*Fig. 16*

Fig 17

Fig.18

0 197 172

Fig 19

0 197 172

*Fig. 20.*

0 197 172

181

180

182

$s_z$

179

_Fig. 22_

s ↑   z ↑

172

171

174   173

t

_Fig. 21_